# EUROPEAN PATENT APPLICATION

(11) **EP 3 852 281 A1**
(43) Date of publication of application: **21.07.2021**
(21) Application number: 19859018.4
(22) Date of filing: 02.09.2019
(51) Int. Cl.: H04B 7/06

(54) **METHOD AND DEVICE FOR BEAM TRAINING**

(30) Priority: 14.09.2018 CN 201811076943
(71) Applicant: Huawei Technologies Co., Ltd., Longgang Shenzhen, Guangdong 518129 (CN)
(72) Inventor: HAN, Xiao, Shenzhen, Guangdong 518129 (CN); ZHOU, Pei, Chengdu, Sichuan 611756 (CN); ZHANG, Rui, Chengdu, Sichuan 611756 (CN); LONG, Yan, Chengdu, Sichuan 611756 (CN); JIA, Chenlong, Shenzhen, Guangdong 518129 (CN)
(74) Representative: Gill Jennings & Every LLP
(86) International application number: PCT/CN2019/103971
(87) International publication number: WO 2020/052458

(57) **Abstract**

This application provides a beam training method and apparatus. The method includes: A first access point AP sends first information, where the first information is used to configure beam training time periods of a plurality of APs, the beam training time periods of the plurality of APs are used to perform beam training between the plurality of APs and a station STA in coverage of the plurality of APs, and the plurality of APs include the first AP and at least one second AP. The at least one second AP sends second information to the first AP based on the first information. The first AP receives the second information, where the second information is used to feed back a first sector selection result, and the first sector selection result is obtained by performing beam training in the beam training time period. According to the beam training method and apparatus in embodiments of this application, beam training time periods of APs can be configured together, to facilitate management and planning of a beam training process.

## Description

This application claims priority to Chinese Patent Application No. 201811076943.7, filed with the Chinese Patent Office on September 14, 2018 and entitled "BEAM TRAINING METHOD AND APPARATUS", which is incorporated herein by reference in its entirety.

### TECHNICAL FIELD

This application relates to the communications field, and more specifically, to a beam training method and apparatus.

### BACKGROUND

There are abundant available spectrum resources in a 60GHz millimeter-wave band, but attenuation is very severe due to an increase in path loss. In this case, a directional communication technology using beamforming (beamforming, BF) is introduced to provide an additional transmit antenna gain or an additional receive antenna gain to overcome signal attenuation. When a beamforming technology is used, beamforming training (beamforming training, BFT) needs to be performed first. A BFT process may be specifically a process of aligning a receive beam with a transmit beam between a personal basic service set control point (PBSS control point, PCP)/access point (access point, AP) and a station (station, STA).

A beam training method is training beams between an AP and a plurality of STAs, to establish parallel transmission links between the AP and the plurality of STAs. The beam training method includes two phases, which are a single-input single-output (single-input single-output, SISO) phase and a multiple-input multiple-output (multiple-input multiple-output, MIMO) phase. Therefore, for a scenario including a plurality of APs and a plurality of STAs, how to manage a beam training process between the plurality of APs and the plurality of STAs has become a technical problem that urgently needs to be resolved.

### SUMMARY

This application provides a beam training method and apparatus to configure beam training time periods of APs together, to facilitate management and planning of a beam training process.

According to a first aspect, a beam training method is provided. The method includes: A first access point AP sends first information, where the first information is used to configure beam training time periods of a plurality of APs, the beam training time periods of the plurality of APs are used to perform beam training between the plurality of APs and a station STA in coverage of the plurality of APs, and the plurality of APs include the first AP and at least one second AP; and the first AP receives second information sent by the at least one second AP based on the first information, where the second information is used to feed back a first sector selection result, and the first sector selection result is obtained by performing beam training in the beam training time period.

According to the method for controlling multiple access points APs beam training in this embodiment of this application, the first AP sends the first information used to configure the beam training time periods of the plurality of APs, so that the plurality of APs and the STA in the coverage of the plurality of APs perform beam training based on the beam training time periods, and the beam training time periods of the APs can be configured together. The method facilitates management and planning of a beam training process, thereby helping improve beam training efficiency.

In an optional embodiment, the plurality of APs have different beam training time periods.

Specifically, the plurality of APs may have different beam training time periods. Herein, "different" may include "completely different", or may include "partially different". To be specific, every two of the plurality of APs have different beam training time periods; or the plurality of APs include some APs, every two of the some APs have different beam training time periods. This is not limited in this embodiment of this application. In this embodiment of this application, the plurality of APs have different beam training time periods, so that interference between the plurality of APs and the STA during beam training can be avoided, and a conflict of resource used when the APs send information can be avoided.

It should be understood that, the plurality of APs have different beam training time periods. This is not limited in this embodiment of this application, because the first AP may schedule, based on existing information, the second AP and the STA to perform beam training in parallel within a same time period that does not cause conflict or interference. Therefore, compared with a case in which the plurality of APs have different beam training time periods, this can greatly improve beam training efficiency.

With reference to the first aspect, in some implementations of the first aspect, the first information includes at least one of the following information: duration in which the second AP performs initiator transmit sector sweep; duration in which the second AP polls the STA; and duration in which the second AP sends the second information.

The first information may be carried in an existing frame as an element (element), or may be carried in a newly defined frame. This is not limited in this embodiment of this application. Optionally, the first information may be specifically a virtual cluster beamforming AP setup (virtual cluster AP setup, VCBF AP setup) frame.

Optionally, the first information may further include duration in which the second AP sends third information, where the third information is used to configure a beam training time period of the STA.

Optionally, the first information may further include a specific requirement for an uplink training and/or a downlink training. For example, only the uplink training is performed, only the downlink training is performed, or both the uplink training and the downlink training are performed.

With reference to the first aspect, in some implementations of the first aspect, the second information includes at least one of the following information: identification information of the STA; identification information of at least one AP, in the plurality of APs, that corresponds to the STA during sector sweep; and a first sector selection result, corresponding to the STA, of the at least one AP in the plurality of APs.

The second information may be carried in an existing frame as an element (element), or may be carried in a newly defined frame. This is not limited in this embodiment of this application. Optionally, the second information may be specifically an AP feedback (AP feedback, AP FBCK) frame.

It should be further understood that, the second AP may receive sector sweep frames sent by a plurality of STAs, and measure the sector sweep frames, to obtain the first sector selection result. The second information may include information about the plurality of STAs, where the information includes an identifier of each of the plurality of STAs, identification information of the at least one, of the plurality of APs, that corresponds when each STA performs sector sweep, and a first sector selection result of the at least one, of the plurality of APs, corresponding to each STA.

Optionally, the second information may further include a number of STAs corresponding to the second information.

With reference to the first aspect, in some implementations of the first aspect, that a first access point AP sends first information includes: The first AP sends the first information to the at least one second AP, to enable the at least one second AP to send third information to the STA, where the third information is used to configure a beam training time period of the STA.

Specifically, the first AP may send the first information to the second AP. After receiving the first information, the second AP sends, based on a configuration in the first information, the third information to a STA in coverage of the second AP, to configure the beam training time period of the STA.

With reference to the first aspect, in some implementations of the first aspect, after that the first AP receives second information sent by the at least one second AP based on the first information, the method further includes: The first AP sends fourth information to the at least one second AP based on the second information, to enable the at least one second AP to send the fourth information to the STA, where the fourth information is used to indicate a second sector selection result of the at least one second AP, and the second sector selection result includes all or a part of the first sector selection result of the at least one second AP.

Specifically, the first AP may collect and summarize the received second information, and send the fourth information to the second AP. The second AP receives the fourth information, and forwards the fourth information to the STA in the coverage of the second AP.

It should be understood that the fourth information is used to indicate the second sector selection result of the at least one second AP, where the second sector selection result may include all or a part of the first sector selection result of the at least one second AP. In other words, for a specific second AP, the first sector selection result includes a sector selection result that is obtained by the second AP by measuring a sector sweep frame sent by a STA associated with the second AP. The sector sweep frame sent by the STA may include a training result obtained by the STA when the AP performs sector sweep, and the training result may be obtained by the STA by measuring a sector sweep frame sent by the AP. After receiving sector sweep frames that are sent by all second APs that need to perform feedback, the first AP may obtain a plurality of first sector selection results. The first AP integrates the plurality of first sector selection results, and the first AP may send an integrated result to the second APs, or may send only a sector selection result of an AP covering one or more STAs to the second AP. Therefore, the second sector selection result may include all or a part of the first sector selection results. This is not limited in this embodiment of this application.

In a possible implementation, the fourth information may be specifically referred to as a forwarding (forwarding) frame or a new sector sweep feedback (NEW SSW FBCK) frame.

With reference to the first aspect, in some implementations of the first aspect, that a first access point AP sends first information includes: the first AP sends the first information to the at least one second AP; the method further includes: the first AP sends third information to the STA, where the third information is used to configure a beam training time period of the STA; and after that the first AP receives second information sent by the at least one second AP based on the first information, the method further includes: the first AP sends fourth information to the STA, where the fourth information is used to indicate a second sector selection result of the at least one second AP, and the second sector selection result includes all or a part of the first sector selection result of the at least one second AP.

Specifically, the first AP may send the first information to the at least one second AP, and send the third information to the STA, to configure beam training time periods between the first AP, the second AP, and the STA, so that the first AP can receive the second information sent by the at least one second AP, collect and summarize the second information, and send the fourth information to the STA.

With reference to the first aspect, in some implementations of the first aspect, the third information includes at least one of the following information: duration in which the second AP performs initiator transmit sector sweep; duration in which the STA performs responder transmit sector sweep; and duration in which the STA receives the fourth information.

The third information may be carried in an existing frame as an element (element), or may be carried in a newly defined frame. This is not limited in this embodiment of this application. In a possible implementation, the third information may be specifically a virtual cluster beamforming STA setup (virtual cluster STA setup, VCBF STA setup) frame.

With reference to the first aspect, in some implementations of the first aspect, that the first AP receives second information sent by the at least one second AP based on the first information includes: The first AP receives the second information centrally fed back by the at least one second AP after the last of the plurality of APs performs beam training.

Specifically, there are a plurality of second APs. For a specific second AP in the plurality of second APs, the second AP may poll the STA, receive a sector sweep frame (which may be referred to as a NEW SSW frame) sent by the STA, measure the sector sweep frame to obtain a first sector sweep result, and then, immediately send the second information (which may be referred to as an AP FBCK frame) including the first sector sweep result to the first AP. Alternatively, the second AP may centrally report the second information including all first sector sweep results, after all the STAs finish sending the sector sweep frames and measure sector sweep frames. This is not limited in this embodiment of this application.

It should be understood that, for an immediate reporting solution, one second AP needs to send a plurality of pieces of second information. However, for a centralized reporting solution, one second AP may integrate, in one piece of second information, first sector sweep results obtained through measurement based on sector sweep frames sent by a plurality of STAs, and report the second information, so that a feedback process can be simplified, and reporting overheads can be reduced.

According to a second aspect, another beam training method is provided. The method includes: A second access point AP receives first information sent by a first AP, where the first information is used to configure beam training time periods of a plurality of APs, the beam training time periods are used to perform beam training between the plurality of APs and a plurality of stations STAs in coverage of the plurality of APs, and the plurality of APs include the first AP and the second AP; and the second AP sends second information to the first AP based on the first information, where the second information is used to feed back a first sector selection result, and the first sector selection result is obtained by performing beam training in the beam training time period.

With reference to the second aspect, in some implementations of the second aspect, the first information includes at least one of the following information: duration in which the second AP performs initiator transmit sector sweep; duration in which the second AP polls the STA; and duration in which the second AP sends the second information.

With reference to the second aspect, in some implementations of the second aspect, the second information includes at least one of the following information: identification information of the STA; identification information of at least one AP, in the plurality of APs, that corresponds to the STA during sector sweep; and a first sector selection result, corresponding to the STA, of the at least one AP in the plurality of APs.

With reference to the second aspect, in some implementations of the second aspect, before that the second AP sends second information to the first AP based on the first information, the method further includes: the second AP sends third information to the STAs, where the third information is used to configure beam training time periods of the STAs.

With reference to the second aspect, in some implementations of the second aspect, after that the second AP sends second information to the first AP based on the first information, the method further includes: the second AP receives fourth information sent by the first AP, where the fourth information is used to indicate a second sector selection result of at least one second AP, and the second sector selection result includes all or a part of the first sector selection result of the at least one second AP; and the second AP sends the fourth information to the STAs.

With reference to the second aspect, in some implementations of the second aspect, the third information includes at least one of the following information: duration in which the second AP performs initiator transmit sector sweep; duration in which the STA performs responder transmit sector sweep; and duration in which the STA receives the fourth information.

With reference to the second aspect, in some implementations of the second aspect, that the second AP sends second information to the first AP based on the first information includes: the second AP feeds back the second information to the first AP after the last AP in the plurality of APs performs beam training.

According to a third aspect, a beam training apparatus is provided, and is configured to perform the method in any one of the first aspect or the possible implementations of the first aspect. Specifically, the apparatus includes a unit configured to perform the method in any one of the first aspect or the possible implementations of the first aspect.

According to a fourth aspect, another beam training apparatus is provided, and is configured to perform the method in any one of the second aspect or the possible implementations of the second aspect. Specifically, the apparatus includes a unit configured to perform the method in any one of the second aspect or the possible implementations of the second aspect.

According to a fifth aspect, another beam training apparatus is provided. The apparatus includes a transceiver, a memory, and a processor. The transceiver, the memory, and the processor communicate with each other through an internal connection channel. The memory is configured to store an instruction. The processor is configured to execute the instruction stored in the memory, to control a receiver to receive a signal, and control a transmitter to send a signal. In addition, when the processor executes the instruction stored in the memory, the processor is enabled to perform the method in any one of the first aspect or the possible implementations of the first aspect.

According to a sixth aspect, another beam training apparatus is provided. The apparatus includes a transceiver, a memory, and a processor. The transceiver, the memory, and the processor communicate with each other through an internal connection channel. The memory is configured to store an instruction. The processor is configured to execute the instruction stored in the memory, to control a receiver to receive a signal, and control a transmitter to send a signal. In addition, when the processor executes the instruction stored in the memory, the processor is enabled to perform the method in any one of the second aspect or the possible implementations of the second aspect.

Optionally, there are one or more processors, and there are one or more memories.

Optionally, the memory and the processor may be integrated together, or the memory and the processor may be separately disposed.

In a specific implementation process, the memory may be a non-transitory (non-transitory) memory such as a read-only memory (read only memory, ROM). The memory and the processor may be integrated on a same chip, or may be separately disposed on different chips. A type of the memory and a manner of disposing the memory and the processor are not limited in this embodiment of this application.

According to a seventh aspect, a beam training system is provided. The system includes the apparatus in any one of the third aspect or the possible implementations of the third aspect and the apparatus in any one of the fourth aspect or the possible implementations of the fourth aspect; or
the system includes the apparatus in any one of the fifth aspect or the possible implementations of the fifth aspect and the apparatus in any one of the sixth aspect or the possible implementations of the sixth aspect.

According to an eighth aspect, a computer program product is provided. The computer program product includes computer program code, and when the computer program code is run on a computer, the computer is enabled to perform the methods in the foregoing aspects.

According to a ninth aspect, a computer-readable medium is provided. The computer-readable medium is configured to store a computer program, and the computer program includes an instruction used to perform the methods in the foregoing aspects.

According to a tenth aspect, a chip is provided. The chip includes a processor. The processor is configured to invoke, from a memory, an instruction stored in the memory and run the instruction, to enable a communications device on which the chip is installed to perform the methods in the foregoing aspects.

According to an eleventh aspect, another chip is provided, including an input interface, an output interface, a processor, and a memory. The input interface, the output interface, the processor, and the memory are connected to each other through an internal connection channel. The processor is configured to execute code in the memory. When the code is executed, the processor is configured to perform the methods in the foregoing aspects.

### BRIEF DESCRIPTION OF DRAWINGS

FIG. 1 is a schematic structural diagram of a beacon interval according to an embodiment of this application;
FIG. 2 is a schematic diagram of a communications system according to an embodiment of this application;
FIG. 3 is a schematic flowchart of a beam training method according to an embodiment of this application;
FIG. 4 is a schematic flowchart of basic service set control point/access point cluster BPAC training according to an embodiment of this application;
FIG. 5 is a schematic diagram of a frame structure of a request frame and/or a response frame used for BPAC training according to an embodiment of this application;
FIG. 6A and FIG. 6B are a schematic flowchart of a sector-level sweep SLS phase of beam training according to an embodiment of this application;
FIG. 7 is a schematic structural diagram of an AP setup frame (AP setup frame) according to an embodiment of this application;
FIG. 8 is a schematic structural diagram of a STA setup frame (STA setup frame) according to an embodiment of this application;
FIG. 9 is a schematic structural diagram of a new sector sweep frame (NEW SSW frame) according to an embodiment of this application;
FIG. 10 is a schematic structural diagram of an AP feedback frame (AP FBCK frame) according to an embodiment of this application;
FIG. 11 is a schematic structural diagram of a beam training feedback forwarding frame (BF FBCK forwarding frame) according to an embodiment of this application;
FIG. 12A and FIG. 12B to FIG. 14 are schematic flowcharts of a beam refinement phase BRP phase of beam training according to an embodiment of this application;
FIG. 15 is a schematic structural diagram of a new beam refinement protocol frame (NEW BRP frame) according to an embodiment of this application;
FIG. 16 is a schematic flowchart of feeding back an AP FBCK frame in beam training according to an embodiment of this application;
FIG. 17 is a schematic flowchart of sending a BF FBCK forwarding frame in beam training according to an embodiment of this application;
FIG. 18A and FIG. 18B are a schematic flowchart of a sector-level sweep SLS phase of another beam training according to an embodiment of this application;
FIG. 19A and FIG. 19B are a schematic flowchart of a sector-level sweep SLS phase of still another beam training according to an embodiment of this application;
FIG. 20A and FIG. 20B and FIG. 21A and FIG. 21B are schematic flowcharts of a beam refinement phase BRP phase of another beam training according to an embodiment of this application;
FIG. 22 is a schematic flowchart of receiving training according to an embodiment of this application;
FIG. 23A and FIG. 23B are a schematic flowchart of sending training according to an embodiment of this application;
FIG. 24A and FIG. 24B are a schematic flowchart of unsolicited responder sector sweep according to an embodiment of this application;
FIG. 25 is a schematic block diagram of an apparatus according to an embodiment of this application; and
FIG. 26 is a schematic block diagram of another apparatus according to an embodiment of this application.

### DESCRIPTION OF EMBODIMENTS

The following describes technical solutions of this application with reference to the accompanying drawings.

It should be understood that the technical solutions in embodiments of this application may be used in various mobile communications systems, for example, a universal mobile telecommunications system (universal mobile telecommunication system, UMTS), a worldwide interoperability for microwave access (worldwide interoperability for microwave access, WiMAX) communications system, and a future 5G communications system. The technical solutions in the embodiments of this application may be further used in a wireless local area network (wireless local area network, WLAN), and the embodiments of this application is applicable to any protocol in the institute of electrical and electronics engineers (institute of electrical and electronics engineers, IEEE) 802.11 series protocols currently used for the WLAN.

The WLAN may include one or more basic service sets (basic service set, BSS). Network nodes in the basic service set include an access point (access point, AP) and a station (station, STA). Based on an original BSS, a personal basic service set (personal basic service set, PBSS) and a personal basic service set control point (PBSS control point, PCP) are introduced in the IEEE 802. 11ad. Each personal basic service set may include one AP/PCP and a plurality of stations associated with the AP/PCP.

It should be understood that an initiating device in the embodiments of this application may also be referred to as an initiator initiator, and a responding device may also be referred to as a responder responder. Details are not described below again.

Specifically, using the WLAN as an example, in the embodiments of this application, the initiating device and the responding device each are a device having a wireless communication function, and may be a user station (station, STA) in the WLAN. The user station may also be referred to as a user unit, an access terminal, a mobile station, a mobile station, a remote station, a remote terminal, a mobile device, a user terminal, a terminal, a wireless communications device, a user agent, a user apparatus, or user equipment (user equipment, UE). The STA may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless local area network (for example, Wi-Fi) communication function, a computing device, or another processing device connected to a wireless modem.

In addition, the initiating device and the responding device each in the embodiments of this application may alternatively be an AP/PCP in the WLAN. The AP/PCP may be configured to: communicate with an access terminal through the wireless local area network, and transmit data of the access terminal to a network side, or transmit data from a network side to the access terminal.

For ease of understanding and description, as an example instead of a limitation, the following describes an execution process and actions of a beam training method and apparatus in a WLAN system in this application.

The following first describes related technologies in this application.

### 1. Beacon interval (beacon interval, BI)

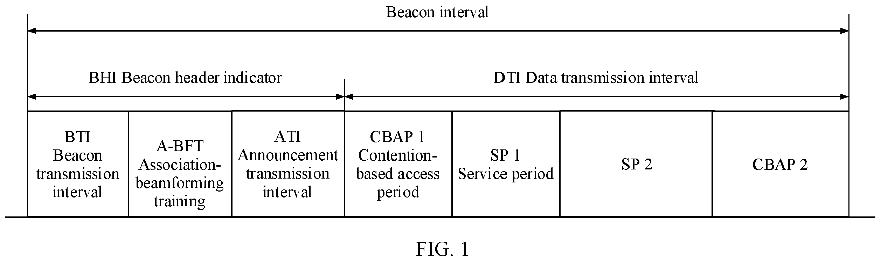

FIG. 1 is a schematic structural diagram of a beacon interval BI. As shown in FIG. 1, the beacon interval is divided into a beacon header indication (beacon header indication, BHI) and a data transmission interval (data transmission interval, DTI). The BHI further includes a beacon transmission interval (beacon transmission interval, BTI), association beamforming training (association beamforming training, A-BFT), and an announcement transmission interval (announcement transmission interval, ATI).

Specifically, a PCP/AP sends a plurality of beacon (beacon) frames in the BTI based on a sector number, where the beacon frames are used for downlink sector sweep. The A-BFT is used by a STA to perform association and uplink sector sweep. The ATI is used by the PCP/AP to poll the STA for buffered data information and allocate a resource in the data transmission interval (data transmission interval, DTI) to the STA. The entire DTI is divided into a plurality of subintervals, and the subintervals are divided into a contention-based access period (contention based access period, CBAP) and a service period (service period, SP) based on an access form. In the service period, scheduling transmission is performed, and contention does not need to be performed.

### 2. Beamforming training (beamforming training, BFT)

There are abundant available spectrum resources in a 60GHz millimeter-wave band, but attenuation is very severe due to an increase in a path loss. Therefore, in a high frequency communications system such as the 802.11ad/ay, a directional communication technology using beamforming (beamforming, BF) is mainly considered. To use the beamforming technology, BFT needs to be first performed. A BFT process is divided into the following phases.
(1) A sector-level sweep (sector-level sweep, SLS) phase. The sector-level sweep phase includes the following four parts:
   an initiator sector sweep (initiator sector sweep, ISS) phase, used to train a directional transmit beam of an initiator, where the initiator directionally sends training data by using a beam of a specific width, and a responder receives the training data in a quasi-omnidirectional manner;
   a responder sector sweep (responder sector sweep, RSS) phase, used to train a directional transmit beam of the responder, where the responder directionally sends training data by using a beam of a specific width, and the training data includes optimal transmit sector information of the initiator in a previous phase; and in this case, the initiator receives the training data in a quasi-omnidirectional manner;
   a sector sweep feedback (sector sweep feedback, SSW-Feedback) phase, where feedback information is a list of initiator transmit sectors that are sorted based on sector quality and includes an optimal sector of the responder in the previous phase, and in this case, the responder is in a quasi-omnidirectional receiving mode; and
   a sector sweep acknowledgment (sector sweep acknowledgment, SSW-ACK) phase, where when SLS is performed before a data transfer phase (data transfer interval, DTI), the SSW-ACK phase may not exist; and when SLS is performed in the DTI phase, the SSW-ACK phase is required. In the SSW-ACK phase, the responder feeds back a list of responder transmit sectors that are sorted based on quality.

   It should be understood that an omnidirectional antenna is used by a device to perform omnidirectional sending or omnidirectional receiving. The omnidirectional antenna radiates evenly at 360 in a horizontal direction, that is, has no directivity, and has a beam of a specific width in a vertical direction. Generally, a smaller lobe width indicates a larger gain. The omnidirectional antenna covers a large area and is usually used in a station in a suburban area in a communications system. Correspondingly, a directional antenna is used by the device to perform directional sending or directional receiving, and radiates within a specific angle range in a horizontal direction, that is, has directivity. Similar to the omnidirectional antenna, a smaller lobe width indicates a larger gain. The directional antenna is usually used in an environment of a long communication distance, small coverage, a high target density, and high frequency usage in the communications system.
(2) A beam refinement protocol (beam refinement protocol, BRP) phase. The beam refinement protocol phase is mainly divided into the following phases:
   an initialization setup (BRP setup) phase, used to configure training information in a subsequent multi-sector ID detection (multiple sector ID detection, MID) phase and a beam combining (beam combining, BC) phase;
   the multi-sector ID detection (multiple sector ID detection, MID) phase, mainly used to train an optimal receive beam of an initiator and a responder, where a method is similar to a process of training an optimal transmit beam, except that training data is not sent in a quasi-omnidirectional mode, but is received in a directional mode; and
   the beam combining (beam combining, BC) phase, mainly used to pair the transmit beam obtained through training in the SLS phase with the receive beam obtained through training in the MID phase, to obtain an optimal pair between the receive beam and the transmit beam, thereby finding an optimal directional communication link. In this case, the training data is sent and received both by using the directional mode.

In at least one round of beam refinement transaction (beam refinement transaction, BRT) phase, beam refinement is performed, to find a more refined beam pair through iteration, thereby improving communication link quality.

In addition, a training process of beam refinement phase transmit sector sweep (BRP-transmit sector sweep, BRP-TXSS) is proposed in 802.11ay. The training process is intended to perform transmit sector sweep and/or perform receive beam training both by using a BRP frame. In 802.11ay, an entire BRP TXSS process includes some or all of a series of processes such as initialization setup, initiator transmit training with a feedback, responder receiving training, responder transmit training with a feedback, receiving training of an initiator, and an acknowledgment phase. The initialization setting phase, the initiator transmit training with a feedback, and the acknowledgment phase are mandatory, and other phases are optional. A main function of the beam is to further refine a beam in a data transmission process.

Multi-user multiple-input multiple-output (multi-user multiple-input multiple-output, MU-MIMO) training in 802.11ay is beam training performed between one AP and a plurality of STAs, to establish a parallel transmission link between the AP and the plurality of STAs. The multi-user multiple-input multiple-output training includes two phases: a single-input single-output (single-input single-output, SISO) phase and a multiple-input multiple-output (multiple-input multiple-output, MIMO) phase.

The SISO phase includes an initiator transmit sector sweep (initiator transmit sector sweep, I-TXSS) subphase and a SISO feedback (SISO feedback) subphase. In the I-TXSS phase, when an initiator sends a short sector sweep (short sector sweep, SSSW) frame or a sector sweep (sector sweep, SSW) frame, all responders can perform listening (beam training), and then return results to the initiator through a BRP frame in a unified time division manner. This process is performed in an orderly and coordinated manner, thereby avoiding a conflict in training in a conventional association beamforming (association beamforming training, A-BFT) phase. The A-BFT phase exists within a beacon interval (beacon interval, BI) of 802. 11ad and 802.11ay, and corresponds to the SLS phase in the beamforming process. In the A-BFT phase, operations of responder transmit sector sweep (responder transmit sector sweep, R-TXSS) and sector sweep feedback (SSW feedback) are mainly performed.

The MIMO phase includes two subphases: a downlink MIMO phase and an uplink MIMO phase.

The downlink MIMO phase should start after the SISO phase ends. Based on feedback information in the SISO phase, if some responders experience multi-user interference due to MU-MIMO transmission, in a multi-user multiple-input multiple-output beamforming setting (MU-MIMO BF setup) phase in the downlink MIMO training phase, these responders are excluded in the following two subphases: After a media beamforming interframe space (medium beamforming interframe space, MBIFS) time at the end of the MU-MIMO BF setup subphase, the initiator starts a multi-user multiple-input multiple-output beamforming training (MU-MIMO BF training) subphase. In this phase, the initiator transmits one or more BRP packets to a remaining responder in the multi-user group, and each BRP is separated by a short interframe space (short interframe space, SIFS) time. After receiving the information, each responder corresponding to the BRP starts to receive beam training. After an MBIFS time at which the MU-MIMO BF training subphase ends, the initiator starts the multi-user multiple-input multiple-output beamforming feedback (MU-MIMO BF feedback) subphase. In this phase, a poll mechanism is used. The initiator sends a multiple-input multiple-output beamforming poll (MIMO BF poll) frame to poll current responders, to obtain an MU-MIMO BF feedback frame. The frame includes training information of the responder in the MU-MIMO BF training subphase. After an MBIFS time at which the MU-MIMO BF feedback subphase ends, the initiator starts a multi-user multiple-input multiple-output beamforming selection (MU-MIMO BF selection) subphase. In this phase, the initiator sends an MU-MIMO BF selection frame to each responder in the multi-user group, to notify the responder of information required for completing training.

The uplink MIMO phase consists of three subphases, which are specifically an MU-MIMO BF setup subphase, an MU-MIMO BF training subphase, and an MU-MIMO BF selection subphase. In the MU-MIMO BF setup subphase, the MU-MIMO BF setup frame is sent by the initiator to each responder in the multi-user group. The basic principle is the same as that in downlink. In the MU-MIMO BF training subphase, the poll mechanism is still used. The initiator sends a MIMO BF poll frame to each responder that is still in the multi-user group, and then each responder transmits one or more BRP packets to the initiator to complete one training. In the MU-MIMO BF selection subphase, the initiator sends one or more MU-MIMO BF selection frames to each responder. The frame contains information about the entire training result. When transmission of the last frame is completed, it indicates that the entire MU-MIMO training process ends.

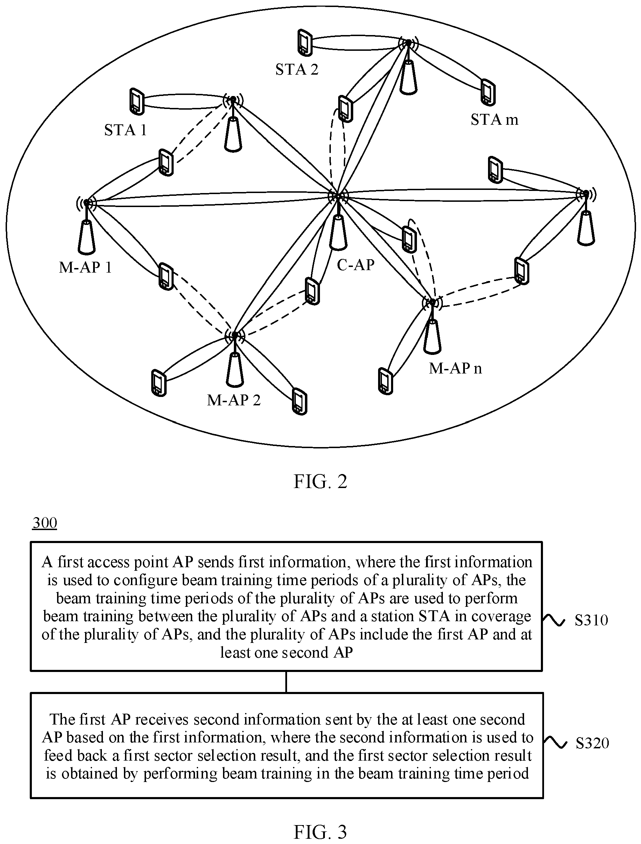

FIG. 2 is a schematic diagram of a communications system according to an embodiment of this application. As shown in FIG. 2, in the communications system, an AP cluster includes a plurality of APs, an AP in the plurality of APs is a coordination node (coordination AP, C-AP) of the AP cluster, and a remaining AP plays a role as a member node (member AP, M-AP) in a subsequent beam training process. As a manager of the AP cluster, the CAP can distinguish between the M-APs and allocate an identity (identity, ID) to each M-AP. For the plurality of APs, one or more STAs further exist in coverage of all or a part of the APs. Specifically, there is one C-AP, n M-APs, and m STAs in total in the communications system shown in FIG. 2, where both m and n are integers greater than or equal to 1.

It should be understood that the communications system may be directed at a moving scenario, or may be directed at a non-moving scenario. In other words, the STA may be movable, or may be fixed. Therefore, when the STA is movable, a quantity of STAs in coverage of one AP may vary in real time. In other words, there may be a moment at which an AP covers no STA. This is not limited in this embodiment of this application.

A set including a plurality of access points APs may be referred to as a basic service set control point/access point cluster (BSS PCP/AP cluster, BPAC). The BPAC corresponds to a scenario in which the plurality of APs exist. In the BPAC, one coordination access point C-AP coordinates another member access point M-AP. The M-AP is considered as a distributed antenna of the C-AP, and the plurality of APs serve one or more STAs. In addition, the BPAC may correspond to a millimeter-wave network scenario, or may correspond to a high-frequency scenario, or may correspond to another scenario in which beam training needs to be performed. This is not limited in this embodiment of this application.

It should be understood that the C-AP and the M-AP are merely names used to distinguish between the coordination access point and the another member access point. The C-AP and the M-AP may alternatively have other names. This is not limited in this embodiment of this application. For example, the C-AP may alternatively be referred to as a first AP, and the M-AP may alternatively be referred to as a second AP. For another example, the C-AP may alternatively be referred to as a primary AP, and the M-AP may alternatively be referred to as a secondary AP. In addition, the BPAC is merely a term used in this specification for ease of description, and the BPAC may alternatively have another name. This is not limited in this embodiment of this application.

In the communications system, because data transmission needs to be performed by using a beamforming technology, beam training needs to be performed between each AP and each STA before the data transmission. Considering that existing single-AP multi-STAbeam training cannot be directly used in a multi-AP multi-STA scenario, the embodiments of this application provide a method for beam training between a plurality of APs and a plurality of STAs.

FIG. 3 is a schematic flowchart of a beam training method 300 according to an embodiment of this application. The method 300 may be used in the communications system 200 shown in FIG. 2. However, this embodiment of this application is not limited thereto.

S310. A first access point AP sends first information, where the first information is used to configure beam training time periods of a plurality of APs, the beam training time periods of the plurality of APs are used to perform beam training between the plurality of APs and a station STA in coverage of the plurality of APs, and the plurality of APs include the first AP and at least one second AP.

S320. The first AP receives second information sent by the at least one second AP based on the first information, where the second information is used to feed back a first sector selection result, and the first sector selection result is obtained by performing beam training in the beam training time period.

Specifically, there is the first AP and the at least one second AP in the plurality of APs included in a BPAC. The first AP corresponds to the C-AP in FIG. 2, and the at least one second AP corresponds to the n M-APs in FIG. 2. It should be understood that the at least one second AP specifically indicates one second AP or a plurality of second APs. For a specific AP in the plurality of APs, there may be a specific quantity of STAs in coverage of the AP. In this application, it is assumed that there are a total of m STAs in the BPAC, and the m STAs are separately located in coverage of different APs. The first AP may send the first information used to configure the beam training time periods of the plurality of APs, to notify the second AP and the STA of the beam training time period, so that the beam training can be performed between the STA and the plurality of APs including the first AP and the second AP in the beam training time periods, and the first AP can receive the first sector selection result sent by the second AP. The first sector selection result is obtained by the at least one second AP by measuring a sector sweep frame sent by the STA. In a possible implementation, that a first AP sends first information may be that the first AP broadcasts the first information.

Therefore, according to the beam training method in this embodiment of this application, the first AP sends the first information used to configure the beam training time periods of the plurality of APs, so that the plurality of APs and the STA in the coverage of the plurality of APs perform beam training in the beam training time periods, and the beam training time periods of the APs can be configured together, to facilitate management and planning of a beam training process, thereby helping improve beam training efficiency.

It should be understood that, because the BPAC includes the at least one second AP that needs to perform feedback, and the second information is sent to the first AP by each of the at least one second AP, a quantity of pieces of second information is equal to a quantity of second APs that need to perform feedback in the BPAC. Correspondingly, a quantity of first sector selection results is also equal to the quantity of second APs that need to perform feedback in the BPAC. For a specific second AP, the first sector selection result includes a sector selection result that is obtained by the second AP by measuring a sector sweep frame sent by a STA associated with the second AP. The sector sweep frame sent by the STA may include a training result of the STA and an AP corresponding to a beacon frame that can be received by the STA, and the training result may be obtained by the STA by measuring a sector sweep frame sent by the AP.

The beam training time periods of the plurality of APs mean that each of the plurality of APs corresponds to one beam training time period. In other words, the first AP may separately configure a plurality of beam training time periods for the plurality of APs.

In an optional embodiment, the plurality of APs have different beam training time periods.

Specifically, the plurality of APs may have different beam training time periods. Herein, "different" may include "completely different", or may include "partially different". To be specific, every two of the plurality of APs have different beam training time periods; or the plurality of APs include some APs, every two of the some APs have different beam training time periods, and the remaining APs have a same beam training time period. This is not limited in this embodiment of this application. In this embodiment of this application, the plurality of APs have different beam training time periods, to avoid mutual interference when the beam training is performed between the plurality of APs and the STA, and avoid a conflict of resources used by the APs to send information.

It should be understood that this embodiment of this application imposes no limitation on that the plurality of APs have different beam training time periods. This is because the first AP may schedule, based on existing information, the second AP to perform beam training with the STA in parallel in a same time period in which neither conflict nor interference is caused. Therefore, compared with a case in which the plurality of APs have different beam training time periods, this can greatly improve beam training efficiency.

In an optional embodiment, for one second AP, the first information includes at least one of the following information: duration in which the second AP performs initiator transmit sector sweep; duration in which the second AP polls the STA; and duration in which the second AP sends the second information.

It should be understood that the first information is sent for a specific second AP, and is used to configure a beam training time period of the specific second AP, and a quantity of pieces of first information that needs to be sent by the first AP is equal to the quantity of the at least one second AP. Specifically, for a specific second AP, the first information may include at least one of duration in which the second AP performs initiator transmit sector sweep (I-IXSS), duration in which the second AP polls the STA (that is, the second AP sequentially sends a poll sector sweep poll SSW frame to the STA), and duration in which the second AP sends the second information.

The first information may be carried in an existing frame as an element (element), or may be carried in a newly defined frame. This is not limited in this embodiment of this application. Optionally, the first information may be carried in a virtual cluster beamforming AP setup (virtual cluster AP setup, VCBF AP setup) frame. The VCBF AP setup frame may be a newly defined frame. Certainly, the frame may have another name, for example, an AP initialization frame. This is not limited in this embodiment of this application.

Optionally, for a second AP, the first information may further include duration in which the second AP sends third information, and the third information is used to configure a beam training time period of a STA. The STA may be a STA, served by the second AP, in the stations in the coverage of the plurality of APs. Optionally, the first information may further include a specific requirement for uplink training and/or downlink training, for example, that only the uplink training is performed, only the downlink training is performed, or both the uplink training and the downlink training are performed.

In an optional embodiment, the second information includes at least one of the following information: identification information of the STA; identification information of at least one AP, in the plurality of APs, that corresponds to the STA during sector sweep; and a sector selection result, corresponding to the STA, of the at least one AP in the plurality of APs.

It should be understood that the second information is reported by a specific second AP, content of the second information includes a sector selection result obtained by measuring a sector sweep frame sent by a STA associated with the second AP, and a quantity of pieces of second information that the first AP needs to receive may be equal to the quantity of the at least one second AP. Specifically, the second information may include at least one of identification information of the STA, identification information of a part of APs that correspond to the STA during sector sweep, and a sector selection result, corresponding to the STA, of the part of APs. The part of APs herein are at least one of the plurality of APs, may include the first AP, and may also include the second AP. This is not limited in this embodiment of this application. In other words, for a specific STA, a sector selection result fed back by the STA in a sector sweep frame includes a training result of the STA and an AP corresponding to a beacon frame that can be received by the STA, and the STA may receive a beacon frame sent by the first AP, or may receive a beacon frame sent by another second AP. This is not limited in this embodiment of this application.

The second information may be carried in an existing frame as an element (element), or may be carried in a newly defined frame. This is not limited in this embodiment of this application. Optionally, the second information may be specifically carried in an AP feedback (AP feedback, AP FBCK) frame. The AP FBCK frame may be a newly defined frame. Certainly, the frame may alternatively have another name, for example, an AP report frame. This is not limited in this embodiment of this application.

It should be further understood that, the second AP may receive sector sweep frames sent by a plurality of STAs, and measure the sector sweep frames, to obtain the first sector selection result. The second information may include information about the plurality of STAs, where the information includes an identifier of each of the plurality of STAs, identification information of at least one AP, in the plurality of APs, that corresponds to the STA during sector sweep, and a first sector selection result, corresponding to the STA, of the at least one AP in the plurality of APs.

Optionally, the second information may further include a quantity of STAs corresponding to the second information.

In the BPAC, the first AP may perform different beam training processes based on different communication environments. The following separately describes two beam training processes.

### Process 1

In an optional embodiment, that a first access point AP sends first information includes: The first AP sends the first information to the at least one second AP, to enable the at least one second AP to send third information to the STA, where the third information is used to configure a beam training time period of the STA. Correspondingly, the second AP receives the first information sent by the first AP, and sends the third information to the STA.

Specifically, the first AP may send the first information to the second AP. After receiving the first information, the second AP sends, based on a configuration in the first information, the third information to the STA in the coverage of the second AP, to configure the beam training time period of the STA.

In an optional embodiment, after the first AP receives the second information sent by the at least one second AP based on the first information, the method further includes: The first AP sends fourth information to the at least one second AP based on the second information, to enable the at least one second AP to send the fourth information to the STA, where the fourth information is used to indicate a second sector selection result of the at least one second AP, and the second sector selection result includes all or a part of the first sector selection result of the at least one second AP. Correspondingly, the second AP receives the fourth information sent by the first AP, and sends the fourth information to the STA.

Specifically, the first AP may collect and summarize the received second information, and send the fourth information to the second AP. The second AP receives the fourth information, and forwards the fourth information to the STA in the coverage of the second AP.

It should be understood that the fourth information indicates the second sector selection result of the at least one second AP, and the second sector selection result may include all or the part of the first sector selection result of the at least one second AP. In other words, for a specific second AP, the first sector selection result includes a sector selection result that is obtained by the second AP by measuring a sector sweep frame sent by a STA associated with the second AP. The sector sweep frame sent by the STA may include a training result of the STA and an AP corresponding to a beacon frame that can be received by the STA, and the training result may be obtained by the STA by measuring a sector sweep frame sent by the AP. After receiving the second information sent by the second AP that needs to perform feedback, the first AP may obtain a plurality of first sector selection results. The first AP integrates the plurality of first sector selection results, and may send all the integrated results to the second AP, or may send, to the second AP, only a sector selection result of an AP covering one or more STAs. Therefore, the second sector selection result may include all or a part of the first sector selection results. This is not limited in this embodiment of this application.

In a possible implementation, the fourth information may be specifically referred to as a forwarding (forwarding) frame or a new sector sweep feedback (NEW SSW FBCK) frame.

It should be noted that any one of the first information, the second information, the third information, and the fourth information in this embodiment of this application may be carried in an existing frame as an element, or may be carried in a newly designed frame. This is not specifically limited in this embodiment of this application.

### Process 2

In an optional embodiment, that a first access point AP sends first information includes: The first AP sends the first information to the at least one second AP.

The method further includes: The first AP sends third information to the STA, where the third information is used to configure a beam training time period of the STA.

After the first AP receives the second information sent by the at least one second AP based on the first information, the method further includes: The first AP sends fourth information to the STA, where the fourth information is used to indicate a second sector selection result of the at least one second AP, and the second sector selection result includes all or a part of the first sector selection result of the at least one second AP.

Specifically, the first AP may send the first information to the at least one second AP, and send the third information to the STA, to configure the beam training time period between the first AP and the STA and the beam training time period between the second AP and the STA, so as to receive the second information sent by the at least one second AP, then collect and summarize the second information, and send the fourth information to the STA.

In a possible implementation, the process 1 may be used in a case in which the first AP cannot communicate with all the STAs, and the process 2 may be used in a case in which the first AP can communicate with all the STAs. However, it should be understood that, in this embodiment of this application, the beam training method in the process 1 may still be used when the first AP can communicate with all the STAs.

In an optional embodiment, the third information includes at least one of the following information: duration in which the second AP performs initiator transmit sector sweep, duration in which the STA performs responder transmit sector sweep, and duration in which the STA receives the fourth information.

It should be understood that the third information is sent by a specific AP for a specific STA, and is used to configure a beam training time period of the specific STA, and a quantity of pieces of third information is equal to a quantity of STAs that need to perform beam training. Specifically, the third information may include at least one of duration in which the second AP performs initiator transmit sector sweep (I-TXSS), duration in which the STA performs responder transmit sector sweep (R-TXSS), and duration in which the STA receives the fourth information. This is not limited in this embodiment of this application.

The third information may be carried in an existing frame as an element (element), or may be carried in a newly defined frame. This is not limited in this embodiment of this application. In a possible implementation, the third information may be specifically carried in a virtual cluster beamforming STA setup (virtual cluster STA setup, VCBF STA setup) frame. The VCBF STA setup frame may be a newly defined frame. Certainly, the frame may have another name, for example, a STA initialization frame. This is not limited in this embodiment of this application.

In an optional embodiment, that the first AP receives second information sent by the at least one second AP based on the first information includes: The first AP receives the second information that is fed back by the at least one second AP in a centralized manner after the last AP in the plurality of APs performs beam training. Correspondingly, that the second AP sends second information to the first AP based on the first information includes: The second AP feeds back the second information to the first AP after the last AP in the plurality of APs performs beam training.

Specifically, there are a plurality of second APs. For a second AP in the plurality of second APs, the second AP may poll the STA, receive a sector sweep frame (which may be referred to as a NEW SSW frame) sent by the STA, measure the sector sweep frame to obtain the first sector sweep result, and then immediately send the second information (which may be referred to as an AP FBCK frame) including the first sector sweep result to the first AP; or after all the STAs complete sending sector sweep frames, the second AP may measure the sector sweep frames, and report, in a centralized manner, the second information including all the first sector sweep results. This is not limited in this embodiment of this application.

It should be understood that, for a solution of immediate reporting, one second AP needs to send a plurality of pieces of second information. However, for a solution of centralized reporting, one second AP may integrate, in one piece of second information, first sector sweep results obtained by measuring sector sweep frames sent by a plurality of STAs, and report the piece of second information, so that a feedback process can be simplified, and reporting overheads can be reduced.

For ease of understanding, the following describes this application in detail with reference to a specific embodiment by using an example in which the first AP is a C-AP and the second AP is an M-AP.

This embodiment may be applied to the communications system shown in FIG. 2. In the communications system shown in FIG. 2, there is one C-AP, nM-APs, and m STAs. The C-AP performs management and coordination on the n M-APs, to complete beam training between the n+1 APs and the m STAs.

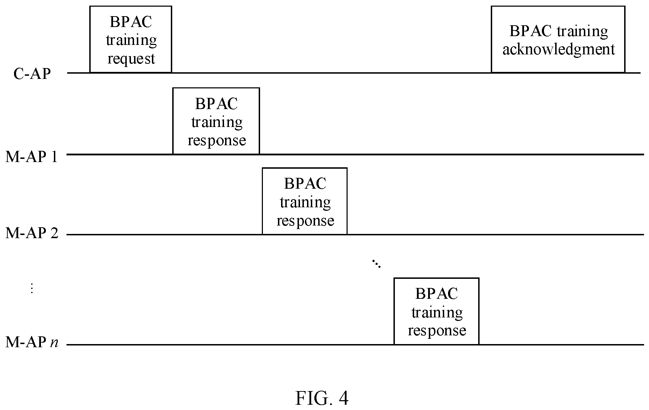

Before the beam training is performed, the C-AP may first establish a BPAC, that is, perform BPAC training. FIG. 4 is a schematic flowchart of basic service set control point/access point cluster BPAC training according to an embodiment of this application. The C-AP may sequentially send, in a BTI, a BPAC training request (BPAC training request) frame to each M-AP to query each M-AP about a specific time that may be used as a virtual AP cluster beamforming training service window (virtual cluster BFT SP, VCSP). Then, the M-AP may feed back a BPAC training response (BPAC training response) frame to the C-AP in a respective BTI. After negotiation is completed, the C-AP broadcasts a BPAC training acknowledgment frame in a next BTI, that is, broadcasts the VCSP to all the M-APs.

Optionally, a beam training sequence of the M-APs may be determined by using cluster time offsets (cluster time offset) of the M-APs. Specifically, in a process of establishing the BPAC, the M-AP negotiates with the C-AP to obtain a cluster time offset index (cluster time offset index) of the M-AP. The cluster time offset index specifies a sequence in which each M-AP sends a beacon frame in the BPAC, and therefore may be used as a basis for determining the beam training sequence of the M-AP.

The BPAC training request frame may specifically include an allocation start (allocation start) field and an allocation block duration (allocation block duration) field, and is used to allocate, to an M-AP, a time used for beamforming training of a virtual AP cluster.

Optionally, the BPAC training request frame may further include a BPAC member role (BPAC member role) field, a BPCA BF allocation requested (BPAC BF allocation requested) field, and a ClusterMaxMem (ClusterMaxMem) field. The BPAC member role field may be a role definition of the AP in a BPAC scenario, and is used to indicate that an AP sending the BPAC request frame is the M-AP or the C-AP. The BPAC BF allocation requested field indicates that the C-AP allocates a time to the M-AP. The ClusterMaxMem field indicates a maximum number of nodes that can be added to the BPAC scenario.

The BPAC training response frame may specifically include a BPCA BF allocation response (BPAC BF allocation response) field, used to indicate whether the M-AP that feeds back the BPAC training response frame accepts the time allocated by the C-AP. Optionally, the BPAC training response frame may further include a BPAC member role (BPAC member role) field. The BPAC member role field may be a role definition of each AP in the BPAC scenario, and is used to indicate whether the AP is the M-AP or the C-AP.

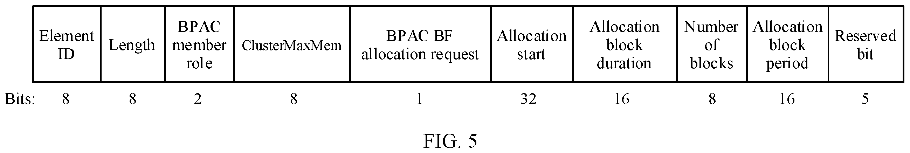

In a possible implementation, a frame structure of the BPAC training request frame is the same as a frame structure of the BPAC training response frame. FIG. 5 is a schematic diagram of a frame structure of a request frame and/or response frame used for BPAC training according to an embodiment of this application. As shown in FIG. 5, the BPAC training request frame and the BPAC training response frame may include one or a combination of the following information.
1. Element ID (element ID): An element ID is an ID used to mark and distinguish an element (element).
2. Length (length): A length is used to indicate a length of the element.
3. BPAC member role (BPAC member role): A BPAC member role is used to indicate whether an AP that sends the element is a C-AP or an M-AP, that is, may distinguish between the C-AP/M-AP.
4. ClusterMaxMem (ClusterMaxMem) field: A ClusterMaxMem field used to indicate a maximum number of APs that can be admitted in the BPAC.
5. BPCA BF allocation requested (BPAC BF allocation requested) field: A BPCA BF allocation requested field is used to indicate whether the frame includes a request for beam training.
6. Allocation start (allocation start): An allocation start is used to indicate a start point (time) at which the allocated M-AP performs beam training.
7. Allocation block duration (allocation block duration): Allocation block duration is used to indicate duration of an allocated block (block).
8. Number of blocks (number of blocks): A number of blocks is used to indicate a specific number of blocks that are allocated.
9. Allocation block period (allocation block period): An allocation block period indicates an interval between two blocks that belong to same allocation.
10. Reserved bit: A reserved bit is reserved for a future expansion function.

Specifically, when the BPAC training request frame and the BPAC training response frame use a same frame structure, the BPAC member role may be used to indicate whether the frame is sent by the C-AP or the M-AP, to distinguish whether the frame is the BPAC training request frame or the BPAC training response frame. In addition, the BPAC BF allocation response field in the BPAC training response frame may be equivalent to the BPAC BF allocation requested field in the BPAC training request frame. In the BPAC training response frame, the allocation start and the allocation block duration may be default.

For example, for a particular M-AP, the C-AP may set the BPAC BF allocation requested field in the BPAC training request frame to 0, and set the beam training time period of the M-AP by using the allocation start and the allocation block duration in the BPAC training request frame. If the M-AP accepts the time set by the C-AP, the M-AP sets the BPAC BF allocation requested field in the BPAC training response frame to 1, and feeds back the BPAC BF allocation requested field to the C-AP. Otherwise, the M-AP sets the BPAC BF allocation requested field in the BPAC training response frame to 0, indicating that the M-AP does not accept the time allocated by the C-AP. If the C-AP receives that the BPAC BF allocation requested field of the M-AP is 1, the C-AP sets the BPAC BF allocation requested field in the BPAC training request frame to 1 as a BPAC training acknowledgment frame, and feeds back the BPAC training acknowledgment frame to the M-AP. Otherwise, the C-AP resets a time for the M-AP, that is, sets the BPAC BF allocation requested field in the BPAC training request frame to 0, and sets the time through the allocation start and the allocation block duration in the BPAC training request frame.

It should be understood that 0 and 1 in the above are merely used as examples. In another embodiment, 1 may be used to indicate that the M-AP does not accept the time allocated by the C-AP, and 0 is used to indicate that the M-AP accepts the time allocated by the C-AP. Alternatively, another bit may be used for indication. This is not limited in this embodiment of this application.

After the BPAC training is completed, each M-AP learns of a specific STA that needs to perform beam training and a training sequence, and then performs beam training. A specific training process may be classified into the following several cases.

Case 1: The C-AP cannot directly communicate with all STAs.

### Sector-level sweep (SLS) phase

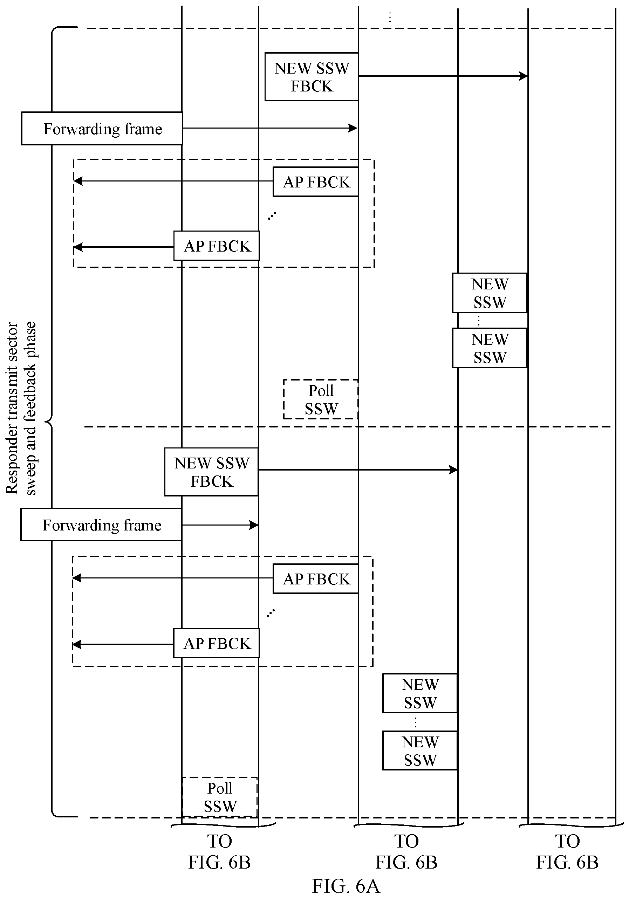

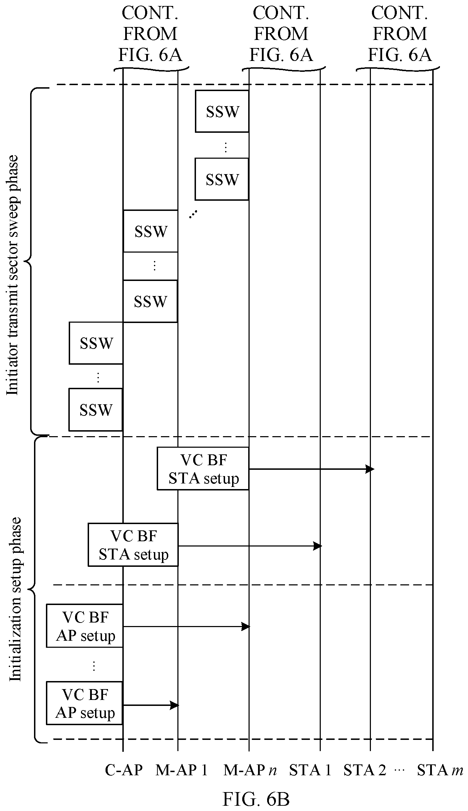

FIG. 6A and FIG. 6B area schematic flowchart of a sector-level sweep SLS phase of beam training according to an embodiment of this application. The SLS phase is divided into the following three phases.

### 1. Initialization setup phase (setup phase)

In this phase, the C-AP broadcasts a VCBF AP setup frame (that is, the first information) to the n M-APs. Correspondingly, the n M-APs that receive the VCBF AP setup frame broadcast the VCBF STA setup frame (that is, the third information) to all STAs associated with the n M-APs, so that beam training time periods of the M-APs and the STAs are configured.

Specifically, the VCBF AP setup frame may include duration in which each M-AP of the n M-APs performs initiator transmit sector sweep I-TXSS, duration in which each M-AP polls a STA, and duration in which each M-AP sends an AP FBCK frame. Optionally, the VCBF AP setup frame may further include duration in which each M-AP sends a STA setup frame, and may further include a specific requirement of uplink training (UL training) and/or downlink training (DL training). For example, only uplink training is performed, only downlink training is performed, or uplink training and downlink training are performed. This is not limited in this embodiment of this application.

Therefore, the M-AP can obtain, by receiving the VCBF AP setup frame, a specific time at which each AP performs I-TXSS, a specific time at which the M-AP polls each STA, a specific time at which each M-AP transmits an AP FBCK frame, and specific requirements of uplink training and downlink training.

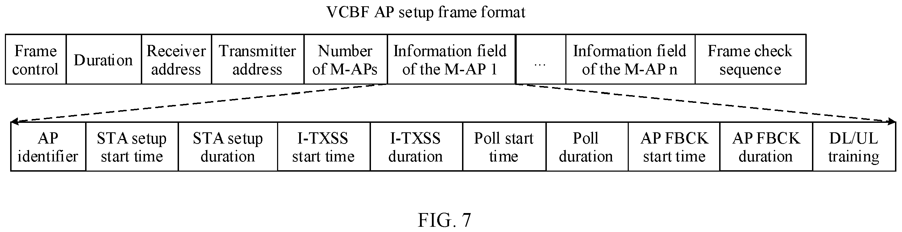

In a possible implementation, a frame format of the VCBF AP setup frame may be shown in FIG. 7. The VCBF AP setup frame includes the following fields.
(1) Frame control (frame control): The first three subfields are a protocol version (protocol version), a type (type), and a subtype (subtype). A remaining subfield depends on settings of the type and the subtype.
(2) Duration (duration)
(3) Receiver address (receiver address, RA)
(4) Transmitter address (transmitter address, TA)
(5) Number of M-APs (number of M-AP)
(6) Information field of the M-AP, for example, an information field of the M-AP 1, that is, M-AP 1 info
(7) Frame check sequence (frame check sequence, FCS): A frame check sequence is used by a network adapter or an interface for a received frame to determine whether an error occurs.

Information about each M-AP of the n M-APs may include the following fields.

Identifier (AP ID) of the AP: An identifier of the AP is usually a MAC address of the AP, or may be an ID of the AP in the BPAC.

STA setup start time (STA setup start time), STA setup duration (STA setup duration), I-TXSS start time (I-TXSS start time), I-TXSS duration (I-TXSS duration), poll start time (poll start time), and poll duration (poll duration).

AP FBCK start time (AP FBCK start time) and AP FBCK duration (AP FBCK duration).

Optionally, the information about each M-AP may further include an uplink and/or downlink training (DL/UL training) indication field, and the field is used to indicate a current training requirement. For example, only uplink training is performed, only downlink training is performed, or uplink training and downlink training are performed.

It should be understood that a frame structure design in the embodiments of this application is merely an example for description, and does not limit the protection scope of this application. Optionally, a frame structure including the foregoing information may be a new frame structure, or may be an existing improved frame structure. This is not limited in this embodiment of this application. A subsequent frame structure is the same, and details are not described again.

Similarly, the VCBF STA setup frame is for a particular STA, and may include duration in which the MAP that sends the VCBF STA setup frame to the STA performs initiator transmit sector sweep I-TXSS, duration in which the STA performs responder transmit sector sweep R-TXSS, and duration in which the STA receives a NEW SSW FBCK frame (that is, the fourth information). Optionally, the VCBF STA setup frame may further include a number of NEW SSW frames, and may further include a specific requirement of uplink training and/or downlink training. For example, only uplink training is performed, only downlink training is performed, or uplink training and downlink training are performed. This is not limited in this embodiment of this application.

Therefore, each STA can obtain, by receiving the VCBF STA setup frame, a specific time at which an M-AP associated with the STA performs I-TXSS, a specific time at which each STA performs R-TXSS, a specific number of NEW SSW frames that need to be sent by each STA, and specific requirements of uplink training and downlink training.

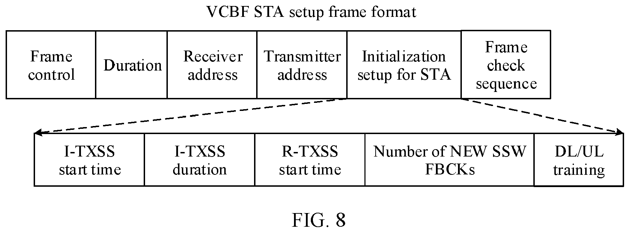

In a possible implementation, a frame format of the VCBF STA setup frame may be shown in FIG. 8. The VCBF STA setup frame includes the following fields.
(1) Frame control (frame control): The first three subfields are a protocol version (protocol version), a type (type), and a subtype (subtype). A remaining subfield depends on settings of the type and the subtype.
(2) Duration (duration)
(3) Receiver address (receiver address, RA): A receiver address may be a MAC address of a receiver, or may be an ID of the receiver in the BPAC.
(4) Transmitter address (transmitter address, TA): A transmitter address may be a MAC address of a transmitter, or may be an ID of the transmitter in the BPAC.
(5) Initialization setup for STA (setup for STA)
(6) Frame check sequence (frame check sequence, FCS): A frame check sequence is used by a network adapter or an interface for a received frame to determine whether an error occurs.

Initialization setup for STA may include the following fields.

I-TXSS start time (I-TXSS start time), I-TXSS duration (I-TXSS duration), R-TXSS start time (R-TXSS start time), R-TXSS duration (R-TXSS duration), and number of NEW SSW frames (number of NEW SSW).

Optionally, the information about each M-AP may further include an uplink and/or downlink training (DL/UL training) indication field, and the field is used to indicate a current training requirement. For example, only uplink training is performed, only downlink training is performed, or uplink training and downlink training are performed.

### 2. Initiator transmit sector sweep phase (I-TXSS phase)

In the I-TXSS phase, each AP (including the C-AP and the M-AP) sequentially sends sector sweep (SSW) frames according to a sequence specified when the VCSP is previously formed. The sector sweep means that a transmitter divides a signal propagation area from a circular area into several sector areas, and sends training data once in each sector.

### 3. Responder transmit sector sweep phase (R-TXSS phase) and feedback phase (SSW FBCK phase)

After the I-TXSS phase is completed, a responder transmit sector sweep phase, namely, an R-TXSS phase, is entered. In the R-TXSS phase, because in this embodiment, the C-AP cannot directly communicate with all STAs, the M-AP polls, according to a time specified in the initialization setup for STA phase, a STA associated with the M-AP, and the polled STA sends a NEW SSW frame.

The NEW SSW frame is sent by the STA, and includes a sector selection result obtained by the STA by measuring the SSW frame sent by the AP. Therefore, the NEW SSW frame may include a number of antennas (number of antenna) that is fed back by the STA and information (per antenna info) corresponding to each antenna. The information corresponding to each antenna may include a sector selection (sector select) result and a corresponding antenna index (antenna index).

It should be understood that, in a BPAC, the n APs may be considered as one AP, and are distinguished by using antenna indexes. Therefore, the number of antennas may also be a number of APs, the antenna index may also be an AP index, and an antenna identifier may also be an AP identifier. This is not limited in this embodiment of this application.

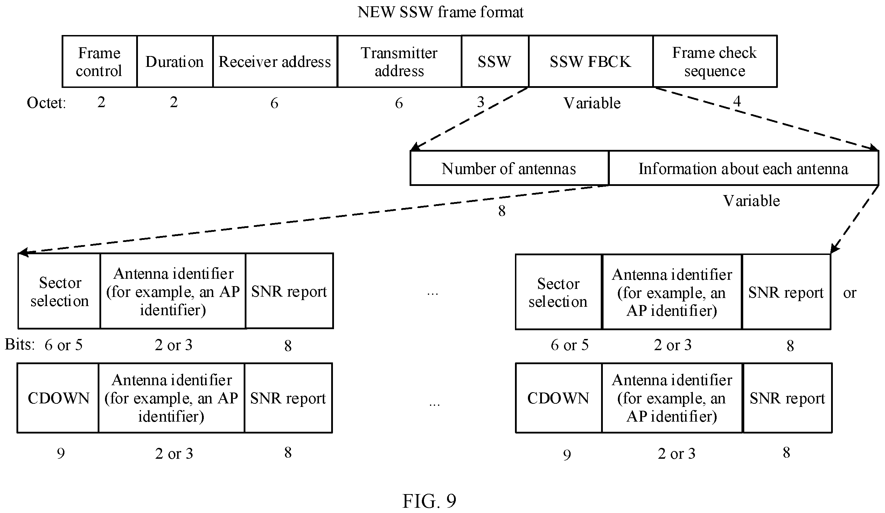

In a possible implementation, a frame format of the NEW SSW frame is shown in FIG. 9. In this embodiment, an SSW FBCK part in an SSW frame is changed from three bytes of a fixed length to bytes of a variable length, to form the NEW SSW frame shown in FIG. 9. The C-AP cannot directly communicate with all the STAs, and the M-AP instead of the C-AP performs poll. Therefore, if the STA is not notified, in a previous VCSP phase, of a specific number of beacon frames that the STA can receive from M-APs, the number of antenna (number of antenna) field identifies a number of destination APs to which the NEW SSW frame is to be sent. If the STA has been notified, in a previous VSCP phase, of a number of beacon frames that the STA can receive from APs, the number of antenna field may not appear. The NEW SSW frame may further include the number of antennas and specific information of each antenna. The specific information of each antenna may include an antenna index, sector selection, and a signal-to-noise ratio (signal-to-noise ratio, SNR) report, and is sent by the STA to the M-AP.

In a design, information about each antenna may include a sector selection field corresponding to each antenna (namely, each AP), an antenna identifier (for example, an AP identifier) field, and an SNR report field. The sector selection field may be a sector identifier and/or a beam (beam) identifier. In another design, information about each antenna may include a count down (count down, CDOWN) field corresponding to each antenna (namely, each AP), an antenna identifier (for example, an AP identifier) field, and an SNR report field. The CDOWN field may be a CDOWN value corresponding to a sector and/or a beam that are/is selected by the STA, and the AP may determine, based on the CDOWN value, the sector and/or the beam that are/is selected by the STA.

It should be understood that the CDOWN field is a counter, may be included in an SSW frame sent by the AP to the STA in the I-TXSS phase, and is used to indicate a transmission quantity of remaining SSW frames that are before TXSS or RXSS ends. The SSW frame further includes a sector identifier and/or a beam identifier. Therefore, the CDOWN value may be used to determine the sector identifier and/or the beam identifier that correspond/corresponds to the SSW frame for sending the CDOWN value. Optionally, a value of the field may range from 0 to 511, is sequentially decreased by 1 based on a sending sequence of SSW frames, and is 0 in the last SSW frame.

For example, if the number of antennas is 2, that is, the number of APs is 2, assuming that the two APs are respectively an AP 1 and an AP 2, information about each antenna may include an identifier of the AP 1, a sector selection result and an SNR report that correspond to the AP 1, an identifier of the AP 2, and a sector selection result and an SNR report that correspond to the AP 2. The sector selection result may be directly indicated by using the sector identifier and/or the beam identifier, or may be indicated by using the CDOWN value. This is not limited in this embodiment of this application.

In a feedback phase (SSW FBCK phase), each M-AP sends an AP FBCK frame (that is, the second information) to the C-AP to implement feedback. Therefore, the C-AP can collect sector selection results of all M-APs and STAs associated with the M-APs.

Specifically, the AP FBCK frame may include an identifier of the STA, an identifier of a corresponding AP when the STA performs sector sweep, and a sector selection result, corresponding to the STA, of the AP. Because the AP FBCK frame is fed back by a particular M-AP to the C-AP, the M-AP may summarize collected sector selection results that are sent by a plurality of STAs respectively through NEW SSW frames, integrate the sector selection results into one AP FBCK frame, and report the AP FBCK frame to the C-AP.

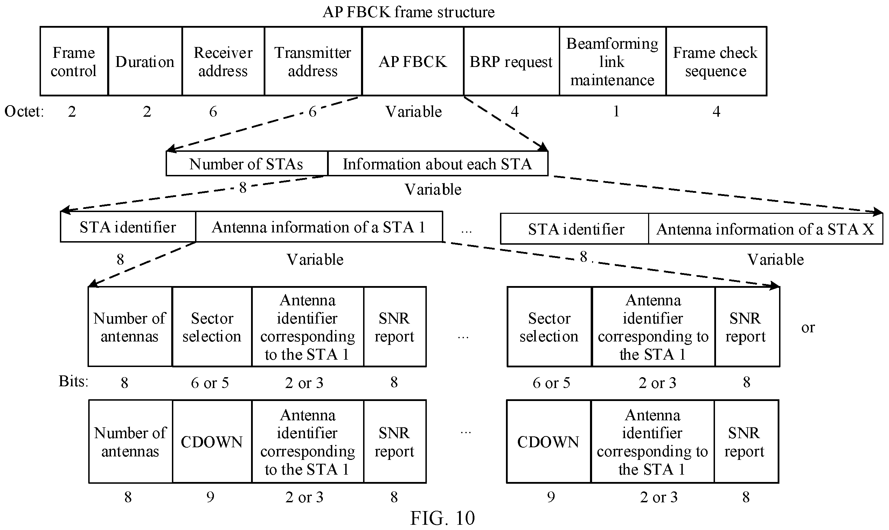

In a possible implementation, a frame format of the APFBCK frame is shown in FIG. 10. FIG. 10 shows sector selection results of X STAs, where X is an integer greater than or equal to 1 and less than or equal to m. The X STAs are STAs located in coverage of the M-AP, and each STA can receive beacon frames sent by some APs. The STA performs beam training with these APs, to obtain sector selection results, corresponding to the STA, of these APs. Therefore, in the AP FBCK frame, for each STA in the X STAs, an identifier of an AP corresponding to the STA and a corresponding sector selection result need to be indicated. For a particular STA, an identifier of an AP corresponding to the STA is an antenna identifier (for example, an AP identifier) field in FIG. 10. A sector selection result, corresponding to the STA, of the AP is a sector selection field or a CDOWN field adjacent to an antenna identifier field of the AP in FIG. 10. Optionally, the AP FBCK frame may further include an SNR report.

In a design, antenna information of a STA 1 may include a number of antennas (namely, a number of APs) corresponding to the STA 1, a sector selection field of each antenna (namely, each AP) corresponding to the STA 1, an identifier (for example, an AP identifier) field of an antenna corresponding to the STA 1, and an SNR report field. The sector selection field may be a sector identifier and/or a beam (beam) identifier. In another design, antenna information of a STA 1 may include a number of antennas (namely, a number of APs) corresponding to the STA 1, a count down (count down, CDOWN) field of each antenna (namely, each AP) corresponding to the STA 1, an identifier (for example, an AP identifier) field of an antenna corresponding to the STA 1, and an SNR report field, where the CDOWN field may be a CDOWN value corresponding to a sector and/or a beam that are/is selected by the STA. The C-AP may determine, based on the CDOWN value, the sector and/or the beam that are/is selected by the STA.

For example, in FIG. 10, for the STA 1, assuming that the M-AP needs to feed back sector selection results of the STA 1 for three APs, an antenna information field of the STA 1 may include a number of antennas field, and the number of antennas field is used to indicate that a number of APs related to the sector selection results of the STA 1 is 3. The antenna information field of the STA 1 may further include three sector selection fields or CDOWN fields, and the three sector selection fields or CDOWN fields are respectively used to indicate the sector selection results of the three APs. To distinguish between the sector selection results of the three APs, the antenna information field may further include three antenna identifier fields corresponding to the STA 1, and the fields may be respectively identifiers of the three APs related to the sector selection results of the STA 1. Specifically, for an AP 1 in the foregoing three APs, a sector selection field or a CDOWN field of the STA 1 for the AP 1 may be adjacent to an identifier field of the AP 1. In this way, a C-AP that receives the AP FBCK frame can accurately obtain a sector selection result between each STA and each AP.

After the C-AP collects the APFBCK frames reported by all the APs, the C-AP arranges and summarizes the received AP FBCK frames, generates a BF FBCK forwarding frame, and sends the BFCK forwarding frame (that is, the fourth information) to all the M-APs. The BF FBCK forwarding frame includes training information of all APs and STAs that is collected by the C-AP, and the training information includes key information such as sector selection, antenna information, and an SNR.

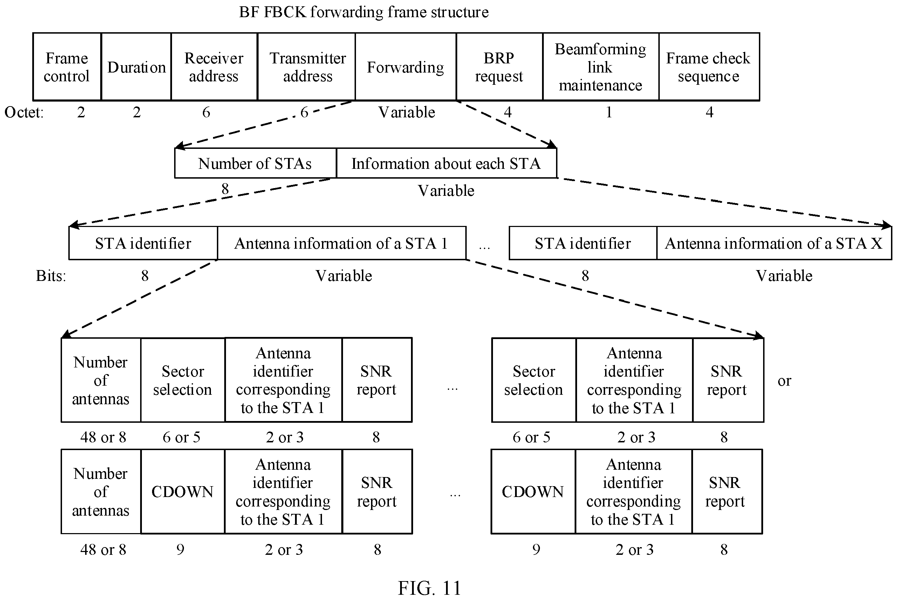

In a possible implementation, a frame format of the BF FBCK forwarding frame is shown in FIG. 11. Similar to the foregoing frame format of the AP FBCK frame, a forwarding (forwarding) field is mainly modified in the BF FBCK forwarding frame, and the forwarding field includes information related to antennas of all STAs served by the M-AP and transmit sector selection information. Details are not described herein.

### Beam refinement BRP phase

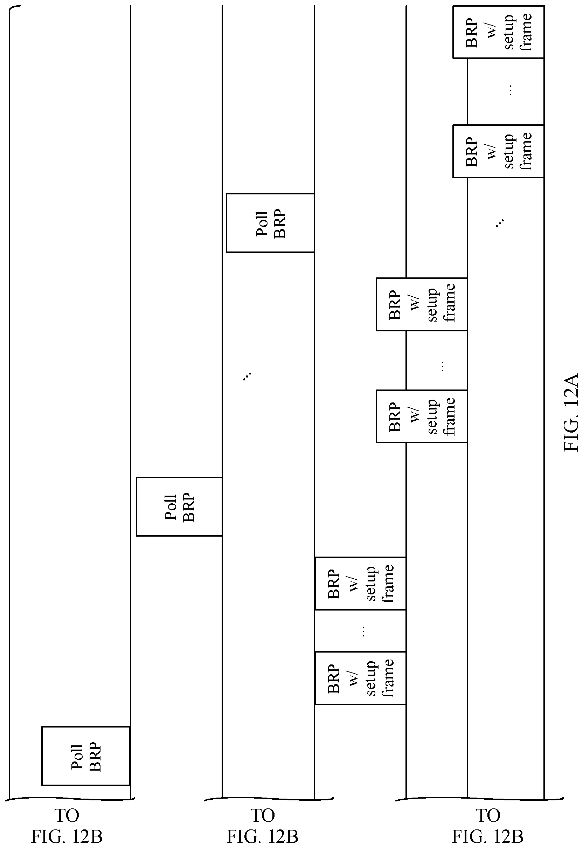

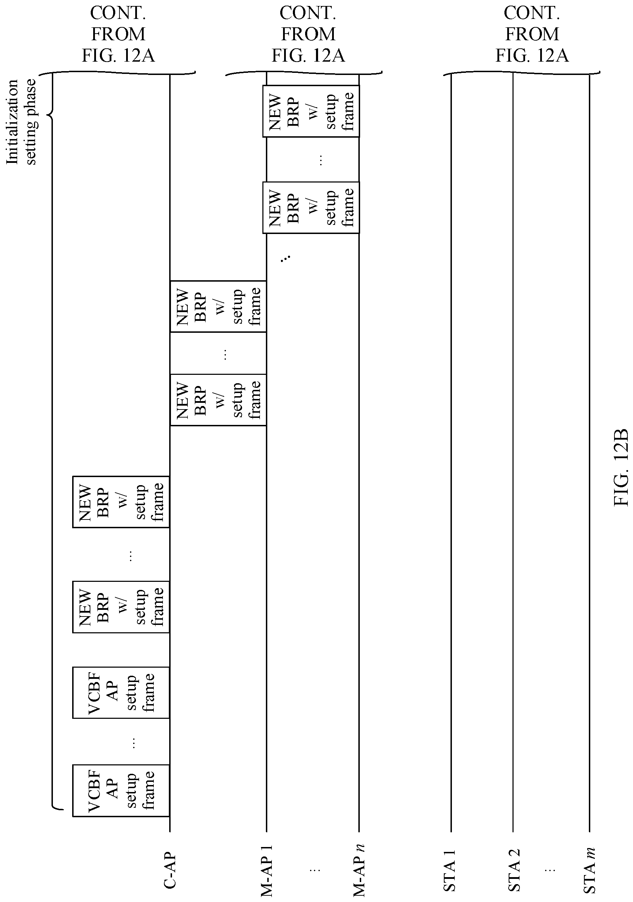

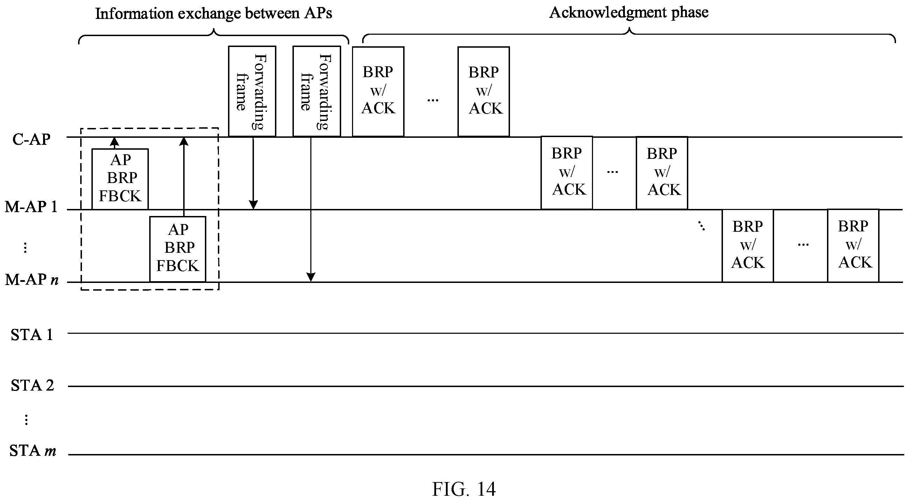

After the foregoing process is completed, each AP and each STA can learn of respective best transmit sectors, and then conduct the beam refinement phase. FIG. 12A and FIG. 12B to FIG. 14 are schematic flowcharts of a beam refinement phase BRP phase of beam training according to an embodiment of this application. As shown in FIG. 12A and FIG. 12B to FIG. 14, the BRP phase may include the following four phases.

### 1. Initialization setup (setup) phase

Similar to the SLS phase, the C-AP and the M-AP need to perform initialization setup before training. The C-AP broadcasts a VCBF AP setup frame to all the M-APs. A frame format of the VCBF AP setup frame is similar to that in the SLS phase, and details are not described herein again. In a possible implementation, a frame format of the VCBF AP setup frame may be shown in FIG. 7.

All APs broadcast a NEW BRP frame (NEW BRP frame w/ setup) with a setup function to the STA. "w/" in NEW BRP frame w/ setup indicates "with". It should be understood that the frame may alternatively have another name. A name of the frame is not limited in this application. Because the C-AP cannot directly communicate with all the STAs, after all the APs broadcast the NEW BRP frame w/ setup frame, each AP polls, based on a time point specified in the VCBF AP setup frame, a STA associated with the AP, and instructs the STA to send the BRP frame w/ setup frame, until all the STAs send the BRP frame w/ setup frame or duration of this phase ends.

Similarly, the NEW BRP frame w/ setup frame may include duration in which the M-AP that sends the VCBF STA setup frame to the STA performs initiator transmit sector sweep I-TXSS, duration in which the STA performs responder transmit sector sweep R-TXSS, and duration in which the STA receives a NEW SSW FBCK frame (that is, the fourth information). Optionally, the NEW BRP frame w/ setup frame may further include a number of BRP-FBCK frames.

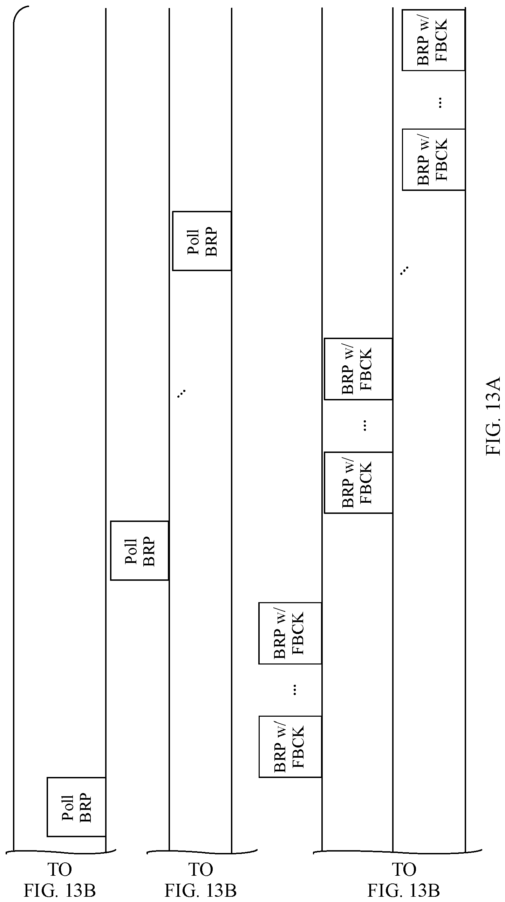

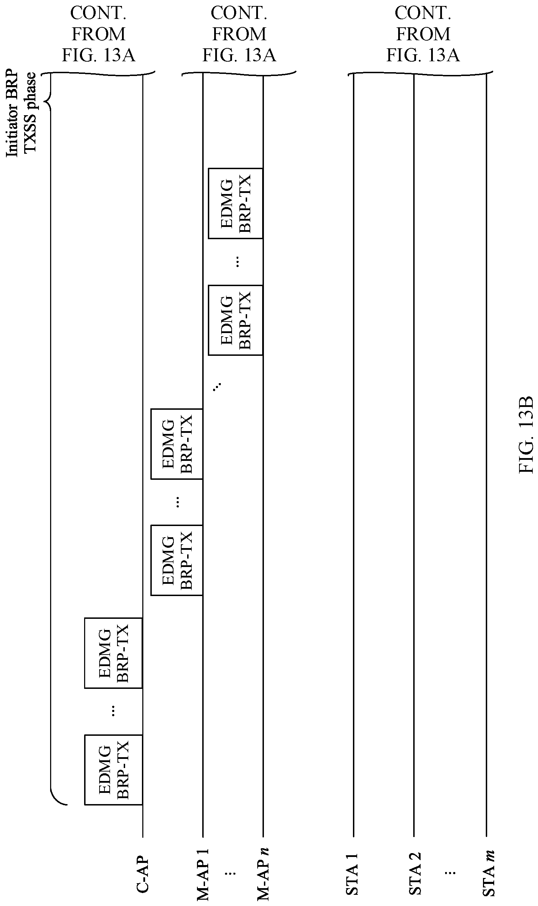

In a possible implementation, a frame format of the NEW BRP frame w/ setup frame may be shown in FIG. 13. The NEW BRP frame w/ setup frame includes the following fields.
(1) Category (category): A category is used to identify a type of the frame.
(2) Unprotected DMG action (unprotected DMG action): An unprotected DMG action is used to identify whether the frame is an announcement (announce) frame or a BRP frame. For example, if the unprotected DMG action field is equal to 0, it indicates that the frame is an announcement frame. If the unprotected DMG action field is equal to 1, it indicates that the frame is a BRP frame.
(3) Dialog token (dialog token): When there are a plurality of concurrent dialog requests, a dialog token is used to identify a specific request to which a current response is directed.
(4) BRP request field (BRP request field): A BRP request field includes many parameters and commands related to beam training performed in the BRP phase, and is used to configure beam training in the BRP phase and the like.
   It should be understood that the BRP request field is for a directional multi-gigabit (directional multi-gigabit, DMG) device, DMG is a new name for the device in the 11ad standard, a beacon frame in the 11ad standard may be referred to as a DMG beacon, and a STA in the 11ad standard may be referred to as a DMG STA.
(5) DMG beam refinement element (DMG beam refinement element): ADMG beam refinement element includes some parameters and configurations related to beam refinement in the BRP phase, and is used to configure BRP refinement.
(6) Zero or more channel measurement feedback elements (zero or more channel measurement feedback elements): The zero or more channel measurement feedback elements are used to carry channel measurement feedback data, and are fed back for a DMG device.
(7) EDMG partial sector level sweep element (EDMG partial sector level sweep element): A sector sweep length needed by a link is recovered after a link failure.
(8) EDMG BRP request element (EDMG BRP request element) (optional): An EDMG BRP request element is similar to (4) except that the EDMG BRP request element is for an enhanced directional multi-gigabit (enhanced directional multi-gigabit, EDMG) device. That is, (4) is to configure a BRP in the 11ad standard, and (8) is to configure a BRP in the 11ay standard.
   It should be understood that DMG refers to a device that supports the 11ad standard, and EDMG refers to a device that supports the 11ay standard. The device that supports the 11ay standard may be downward compatible with the 11ad standard.
(9) Zero or more EDMG channel measurement feedback elements (zero or more EDMG channel measurement feedback elements): The zero or more EDMG channel measurement feedback elements are used to carry channel measurement feedback data, and are similar to (6) except that the zero or more EDMG channel measurement feedback elements are fed back for an EDMG device.
(10) VCBF STA setting element (VCBF STA setup elements)

The VCBF STA setup element may include the following fields.

I-TXSS start time (I-TXSS start time), I-TXSS duration (I-TXSS duration), R-TXSS start time (R-TXSS start time), and number of BRP FBCK frames (number of BRP FBCK).

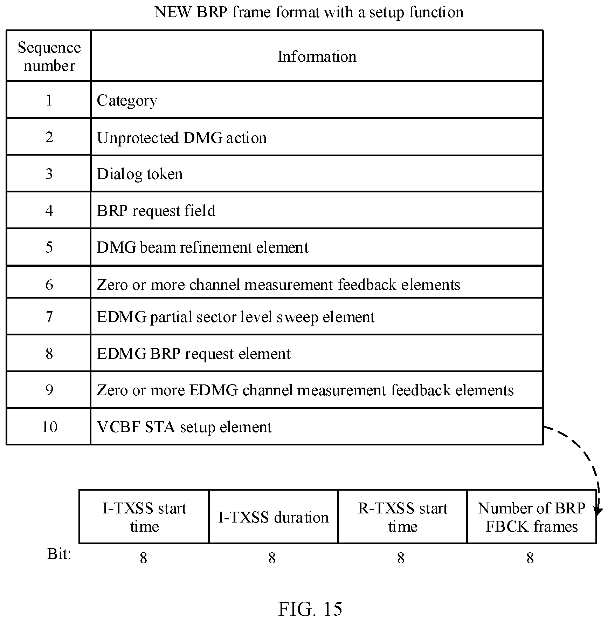

It should be understood that, for a BPAC scenario, an original BRP frame w/ setup frame is improved in this embodiment, and a NEW BRP frame w/ setup shown in FIG. 15 is formed. Compared with the original BRP frame w/ setup frame, the VCBF STA setup elements field is added to the NEW BRP frame w/ setup. The VCBF STA setup elements field includes a specific time at which the M-AP performs the initiator transmit sector sweep (I-TXSS), a specific time at which the STA starts the responder transmit sector sweep (R-TXSS), and a number of BRP FBCKs that need to be transmitted by the STA.

### 2. Initiator beam refinement transmit sector sweep (Initiator BRP TXSS) phase

After all APs receive the BRP frame w/ setup frames from the STAs or after setup phase duration ends, the Initiator BRP TXSS phase is performed. In this phase, each AP sends an EDMG BRP-TX packet based on a time point specified in a VC AP BF setup frame, and then polls a STA associated with the AP, so that the AP sends a BRP FBCK (also referred to as BRP frame w/ feedback) frame.

Afterward, each M-AP feeds back beam refinement training information by sending an AP BRP FBCK frame to the C-AP. A frame format of the AP BRP FBCK frame is similar to that of the AP FBCK frame in the SLS phase, and details are not described herein again. In a possible implementation, the frame format of the AP BRP FBCK frame is shown in FIG. 10.

Therefore, the C-AP can collect and learn of training information of all the M-APs and the STAs, including information such as sector select information, antenna information, and an SNR. After receiving AP BRP FBCK frames sent by all the M-APs, the C-AP sends BF FBCK forwarding frames to all the M-APs. The BF FBCK forwarding frame includes training information, of all the APs and the STAs, collected by the C-APs, including key information such as the sector selection information, the antenna information, and the SNR. In a possible implementation, a frame format of the BF FBCK forwarding frame is shown in FIG. 11. Finally, the M-AP sends a BRP frames w/ ACK frame to the STA associated with the M-AP, to feed back a beam refinement result.

It should be noted that, if the C-AP and all the M-APs have been trained in the previous MU-MIMO phase, in this case, the C-AP and the M-APs have learned of optimal transmit sectors and optimal receive sectors of all the APs in a process of mutual communication between the C-AP and the M-APs. Therefore, in a feedback phase, a simplified manner may be used, to be specific, that all the M-APs sequentially perform feedback is changed to that all the M-APs concurrently send AP FBCK frames. Because the beam training has been performed previously, it can be ensured that no interference is generated in this case. Similarly, when sending the BF FBCK forwarding frames, the C-AP may also concurrently send the BF FBCK forwarding frames instead of sequentially sending the BF FBCK forwarding frames, thereby improving training efficiency.

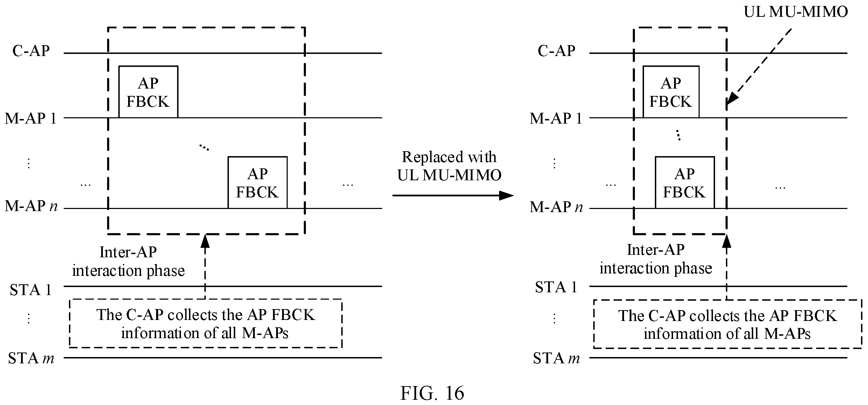

FIG. 16 is a schematic flowchart of feeding back an AP FBCK frame in beam training according to an embodiment of this application. As shown in FIG. 16, a feedback manner on the left side is to perform feedback one by one, to be specific, various M-APs send AP FBCK frames to a C-AP in different time periods. A feedback manner on the right side is to perform feedback concurrently, to be specific, various M-APs concurrently send respective AP FBCK frames to a C-AP. This is not limited in this embodiment of this application.

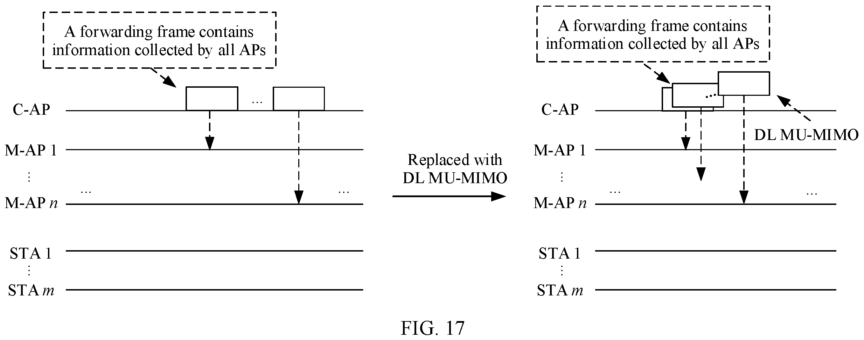

FIG. 17 is a schematic flowchart of sending a BF FBCK forwarding frame in beam training according to an embodiment of this application. As shown in FIG. 17, a feedback manner on the left side is to perform feedback one by one, to be specific, a C-AP sends BF FBCK forwarding frames to various M-APs in different time periods. A feedback manner on the right side is to perform feedback simultaneously, to be specific, a C-AP simultaneously sends BF FBCK forwarding frames to various M-APs. This is not limited in this embodiment of this application.

In this embodiment of this application, a plurality of APs are grouped into an AP cluster, and a C-AP in the AP cluster collects feedback information of all M-APs, and then sends the feedback information to all STAs together. By using an advantage of global coordination, the C-AP centrally controls beam training time periods of the M-APs. Therefore, in the setup phase, problems of training sequence, feedback time, feedback format, and the like that are involved in a subsequent training process are arranged in advance, and invalid training caused by collision and interference can be avoided to a maximum extent. In addition, in a feedback process, specific information of an antenna is added to a conventional feedback frame, so that the M-AP can report more complete training information during feedback, and an entire training process becomes more efficient. In addition, when the C-AP cannot directly communicate with all the STAs, by using a method in which the C-AP contacts the M-AP so that the M-AP performs poll for the C-AP, the M-AP performs training with the STA associated with the M-AP. Therefore, training stability is ensured.

Case 2: A C-AP can directly communicate with all STAs.

### Sector-level sweep SLS phase

### 1. Setup phase (setup phase)

In this phase, the C-AP broadcasts a VCBF AP setup frame and a VCBF STA setup frame. In addition to common fields (for example, a frame header, duration, and an address of a transceiver device), the VCBF AP setup frame further includes special fields, for example, a field that identifies a number of M-APs in a BPAC scenario and a field that identifies specific information of each M-AP. An M-AP 1 info field in the VCBF AP setup frame is used as an example. The field includes an ID of an M-AP 1, which is usually a MAC address of the M-AP 1. In addition, a start time and duration of each sub-phase in an SLS phase in which the M-AP 1 starts beam training are further specified in the field. Similarly, in the VCBF STA setup frame, in addition to the common fields, a setup for STA field includes a start time and duration of each sub-phase in an SLS phase in which the C-AP notifies each STA to perform beam training, and a sector sweep feedback performed by the STA is notified in the setup for STA field. After the MAP and the STA receive corresponding setup frames, the setup phase is completed. This means that the C-AP has made overall deployment planning for subsequent training. Frame structures of the two types of frames are respectively the same as those in Case 1, and details are not described herein again.

### 2. Sector sweep phase

After the setup phase is completed, a sector sweep phase is performed. The sector sweep phase includes a transmitter transmit sector sweep phase and a responder transmit sector sweep phase, that is, an I-TXSS phase and an R-TXSS phase. In the I-TXSS phase, all APs (including the C-AP and the M-AP) sequentially send sector sweep frames, namely, SSWs, in a sequence specified when a VCSP is previously formed. The sector sweep means that a transmitter divides a signal propagation area from a circular area into several sector areas, and sends training data once in each sector. After completing sector sweeps in the I-TXSS phase, all the APs start sector sweeps in the R-TXSS phase.

In this embodiment, because all STAs may directly communicate with the C-AP, the C-AP can directly poll each STA, so that the C-AP instructs the STA to perform training in the R-TXSS phase, and sends an SSW frame. It should be noted that, in both the I-TXSS phase and the R-TXSS phase, the AP and the STA send the SSW frames in a directional manner based on sector division, and receive NEW SSW frames in a quasi-omnidirectional manner. Therefore, after quasi-omnidirectionally receiving the NEW SSW frames, the M-APs send AP FBCK frames to the C-AP. A function of the AP FBCK frame is that: each M-AP feeds back SSW feedback information of the M-AP to the C-AP, and finally, after collecting the feedback information of all M-APs, the C-AP sends a NEW SSW FBCK frame to a polled STA. After all STAs are polled, the sector-level sweep phase in this embodiment basically ends. When the phase ends, all the APs and the STAs can learn of their own optimal sending sectors through training.

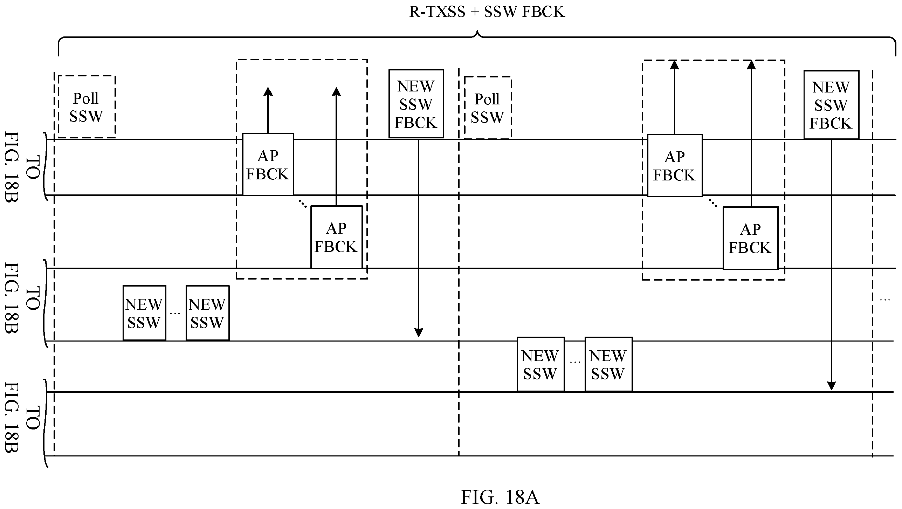

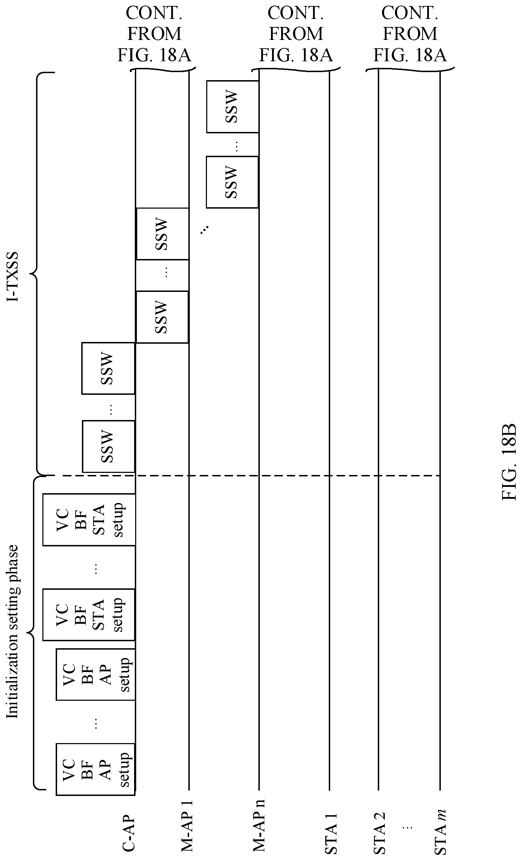

In a possible implementation, as shown in FIG. 18A and FIG. 18B, after all STAs are polled and send the NEW SSW frames to the M-APs, the M-APs may immediately send the AP FBCK frames to the C-AP to perform training feedback, and this process is repeated until all the STAs are polled once.

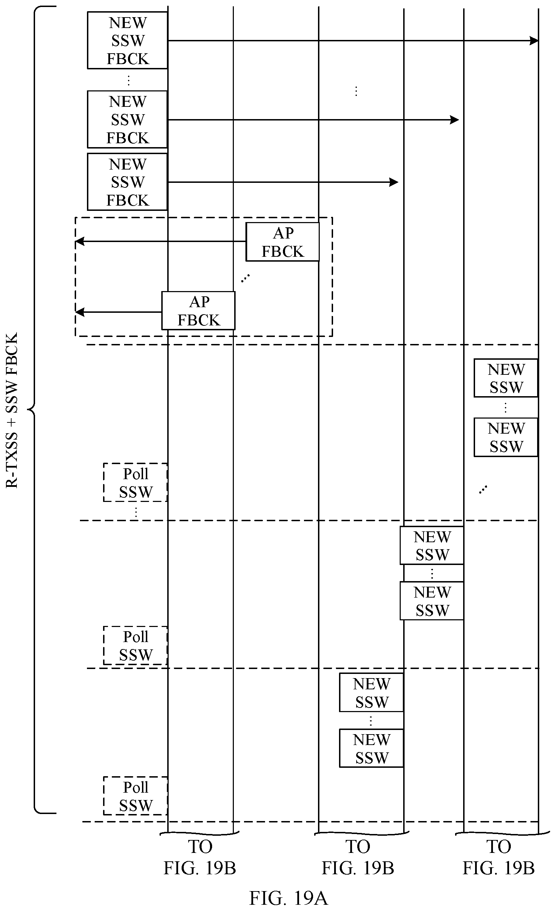

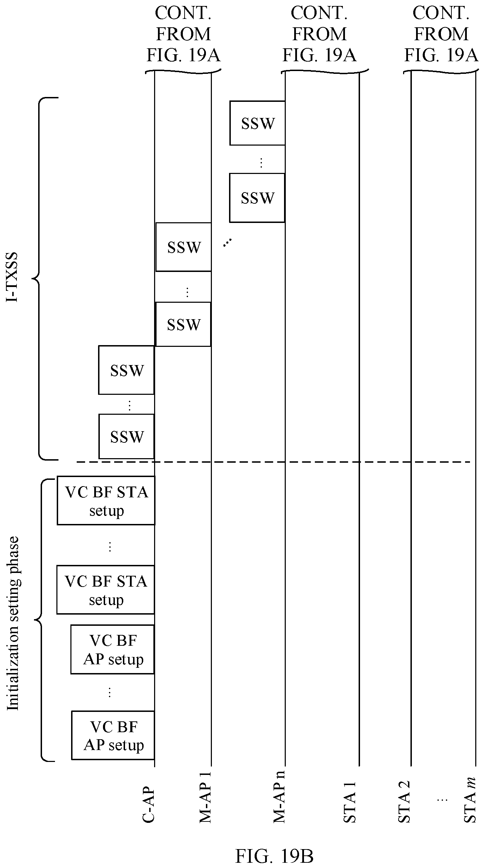

In another possible implementation, as shown in FIG. 19A and FIG. 19B, only after all STAs complete sending the NEW SSW frames, the M-APs send the AP FBCK frames to the C-AP, to report a training result of the M-APs. Afterward, the C-AP sends New SSW-FBCK frames to all STAs as a feedback of an entire training result.

In an immediate feedback manner, the C-AP may relatively quickly obtain information fed back by the M-AP, to first integrate the obtained information. However, in a centralized feedback manner, the M-APs may arrange information obtained by measuring sector sweep frames sent by a plurality of STAs, and summarize the information in one AP FBCK for sending. In this way, the centralized feedback manner reduces signaling overheads, and makes a training process more simple and efficient.

In this embodiment of this application, all APs within a range are combined and considered as one AP cluster, and are distinguished internally by using the C-AP and the M-AP, so that a potential collision problem in a beam training process can be avoided. In this embodiment, the C-AP may directly communicate with all the STAs. Therefore, the C-AP performs global control in the entire SLS phase, so that collision and interference are avoided to a maximum extent, and beam training efficiency in a multi-AP multi-STA scenario can be greatly improved.

### Beam refinement BRP-TXSS phase

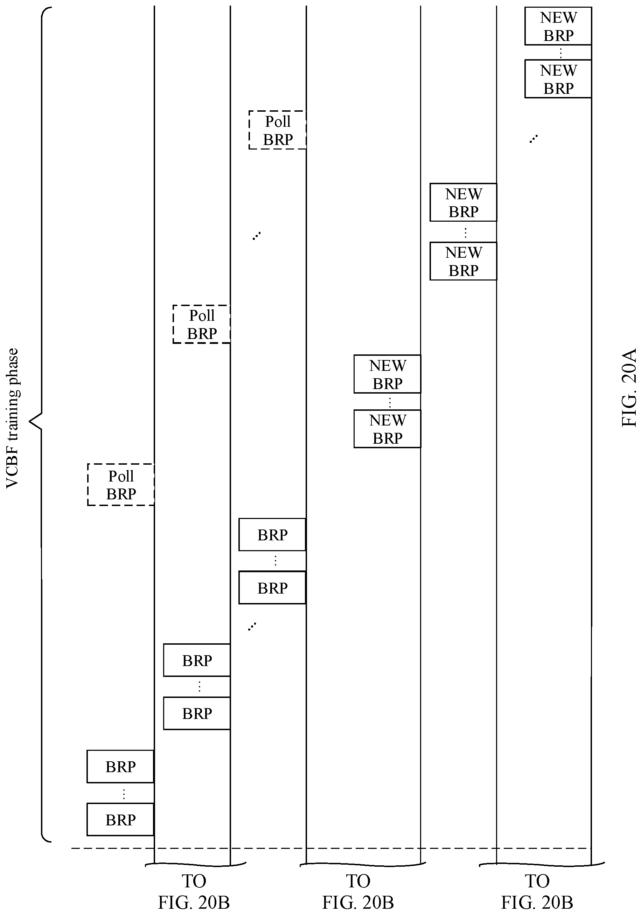

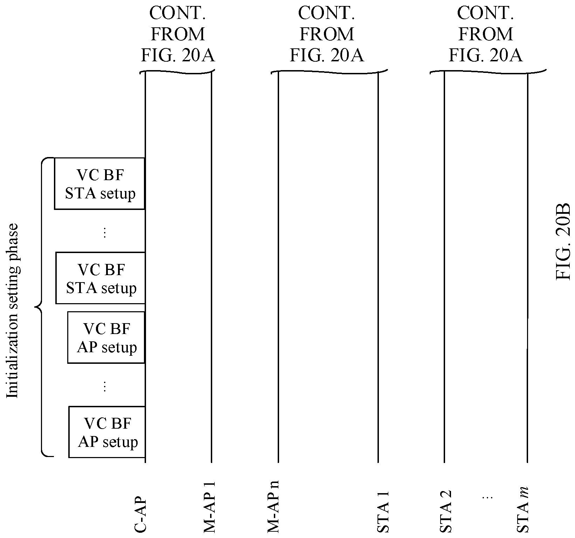

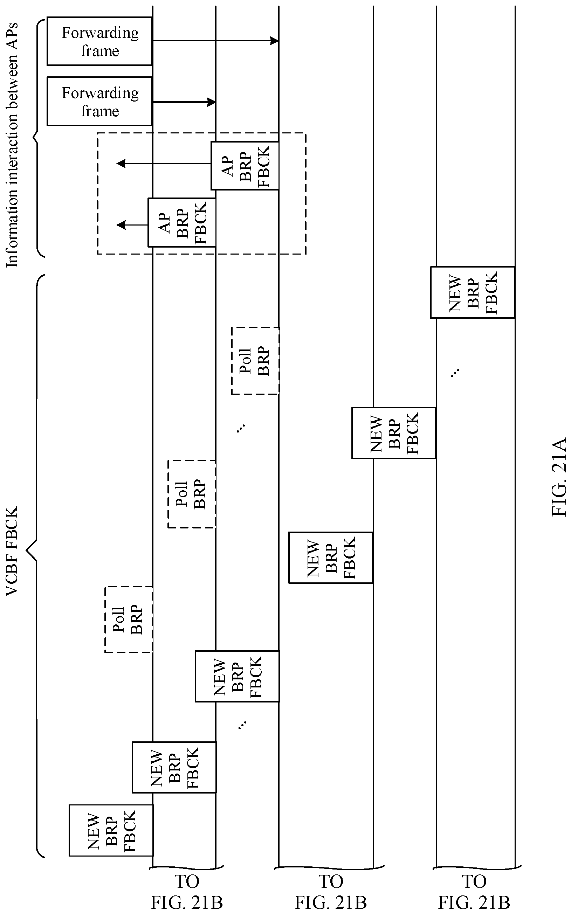

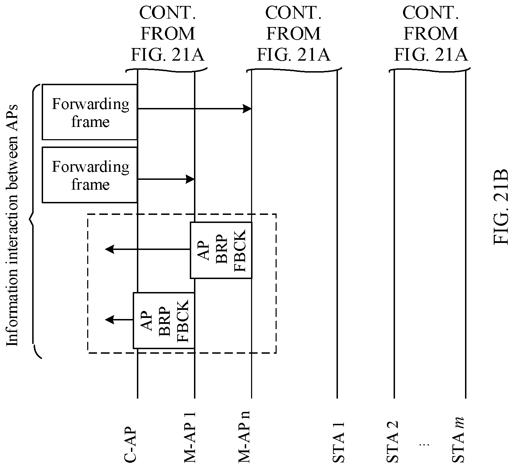

FIG. 20A and FIG. 20B and FIG. 21A and FIG. 21B are a schematic flowchart of a beam refinement phase BRP phase of another beam training according to an embodiment of this application. As shown in FIG. 20A and FIG. 20B and FIG. 21A and FIG. 21B, a C-AP broadcasts a VCBF AP setup frame and a VCBF STA setup frame. The VCBF AP setup frame and the VCBF STA setup frame include specific times at which each AP polls a STA in a subsequent training process. The polled STA sends a NEW BRP frame. Subsequently, an M-AP reports training information, and receives a BF FBCK forwarding frame from the C-AP. Afterward, each AP sends a NEW BRP FBCK frame as a training result feedback to a STA associated with the AP, and polls each STA, so that each STA receives the feedback. At this time, all APs and all STAs can determine their own optimal receive sectors and optimal receive beams.

It should be noted that, the NEW BRP frame in this embodiment may also be replaced with a plurality of BRP frames, and a specific number of the plurality of BRP frames may be a number of frames received by the STA plus 1, where the additional 1 represents the C-AP. However, because the STA may not receive frames sent by all the APs, alternatively, each STA may be notified of a number of APs in the scenario in the initial setup phase, and the STA can learn of a number of BRP frames that the STA needs to send in the training phase.

It should be understood that, in a training process, an antenna may be in an omnidirectional working mode, to be specific, both the AP and the STA send data frames to the surrounding area in 360 degrees, or the antenna may be in a directional working mode. In this embodiment of this application, by changing a working mode of the antenna, an optimal transmit sector and an optimal receive sector of a transmitter and a receiver may be paired. To be specific, an actual link may be formed in a transmission process, to provide a system gain.

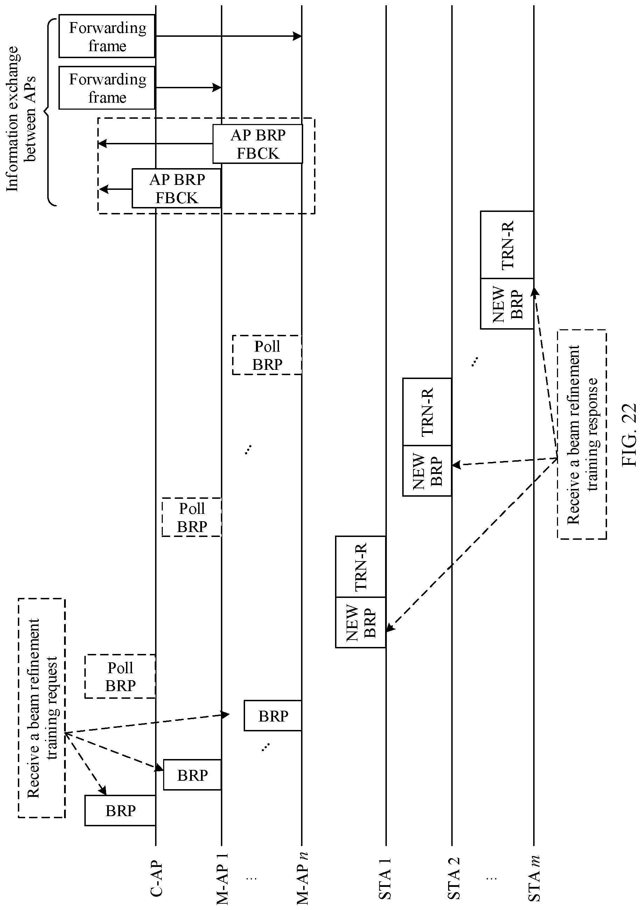

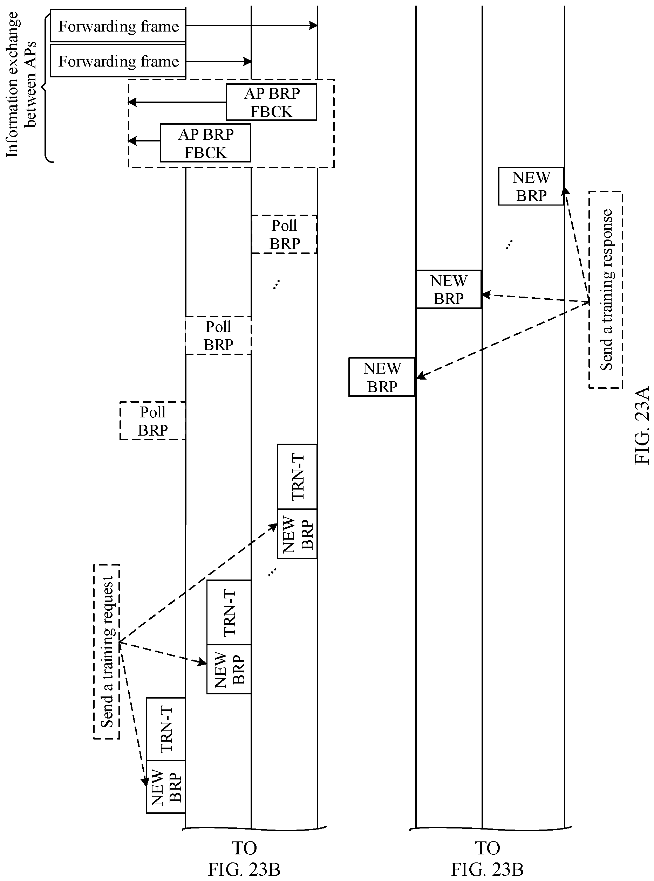

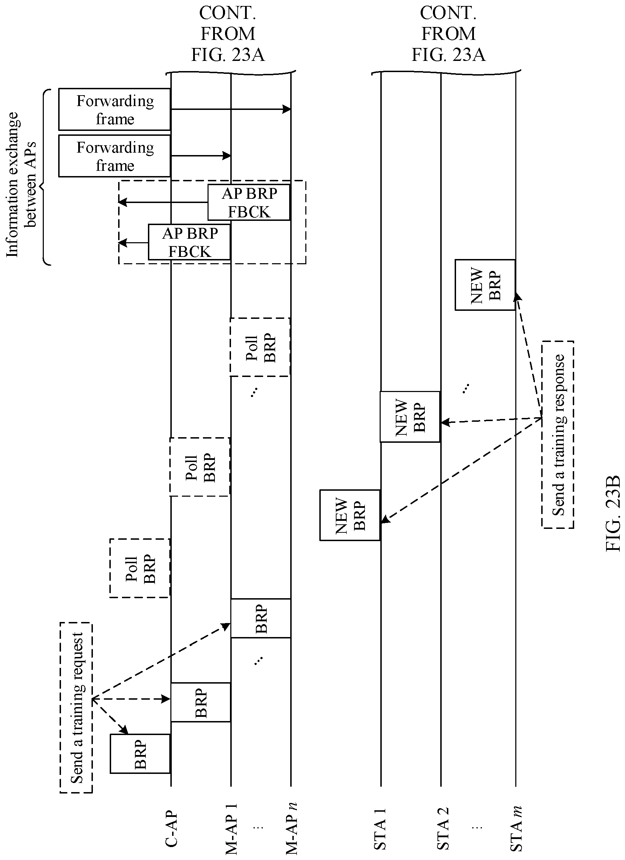

This embodiment further provides three beam refinement training solutions, which are respectively receive training, transmit training, and receive and transmit training. Specifically, the receive training may be as shown in FIG. 22, the transmit training may be as shown in FIG. 23A and FIG. 23B, and the receive and transmit training may be as shown in a combination of FIG. 22 and FIG. 23A and FIG. 23B.

Specifically, the receive and transmit training is used as an example:
(1) At the beginning of this phase, each AP sends a BRP frame to notify a STA that the receive training is to be performed.
(2) After receiving a poll frame, a STA that receives a BRP frame sequentially sends a NEW BRP frame with a receive training (receive training, TRN-R) field in response to initiating the receive training by the AP, and simultaneously request that the AP perform beam transmit training.
(3) After all APs receive NEW BRP frames with TRN-R fields, M-APs report specific training information to a C-AP, and then the C-AP sends forwarding frames to all M-APs. At this time, each AP can further refine a receive sector of the AP.
(4) All the APs send, to the STA, NEW BRP frames with transmit training (transmit training, TRN-R) fields as a response to the receive training, and simultaneously notify STAs that the APs are ready for the transmit training.
(5) Scheduled by poll, the STAs that receive the frames send the NEW BRP frames with the TRN-T fields to associated APs to perform the transmit training, and notifies the APs that the STAs are ready for the transmit training.
(6) After all the APs receive the NEW BRP frames with the TRN-T fields, the M-APs report specific training information to the C-AP, and then the C-AP sends forwarding frames to all the M-APs. At this time, each AP can learn of a further refined transmit beam of the STA.
(7) All the APs send the NEW BRP frames with the TRN-T fields to the STAs as a response to the transmit training and notify the STAs to perform the receive training.
(8) Scheduled by poll, each STA sequentially sends a NEW BRP frame carrying a TRN-R field to the associated AP. At this time, the STA can further refine a receive sector of the STA.
(9) After receiving feedback from the STA, the M-APs report specific training information to the C-AP, and then the C-AP sends forwarding frames to all the M-APs. At this time, each AP can further refine a transmit beam of the AP.

Because the receive and transmit training is a process in which the receive training and the transmit training are integrated, details of the receive training and the transmit training are not described herein again.

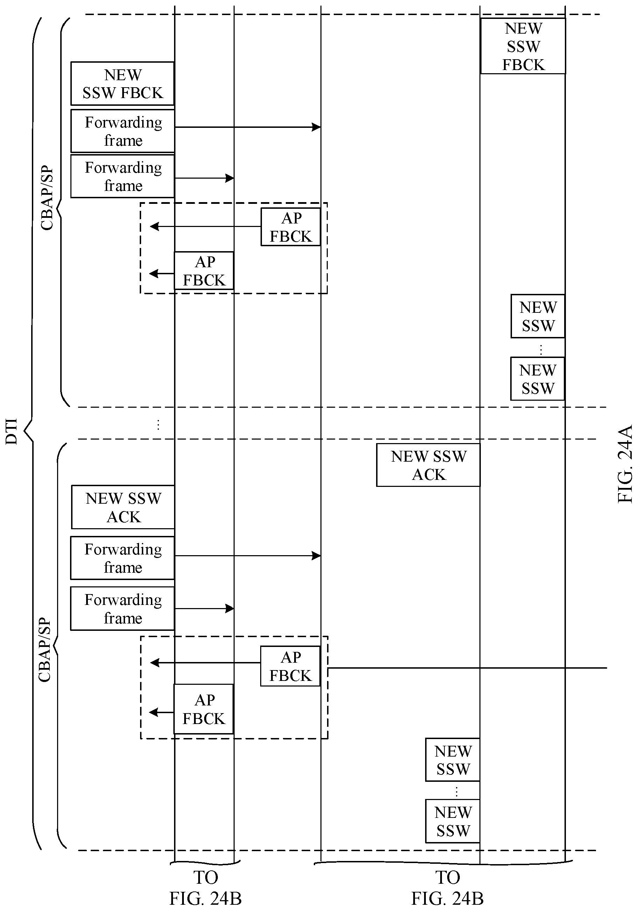

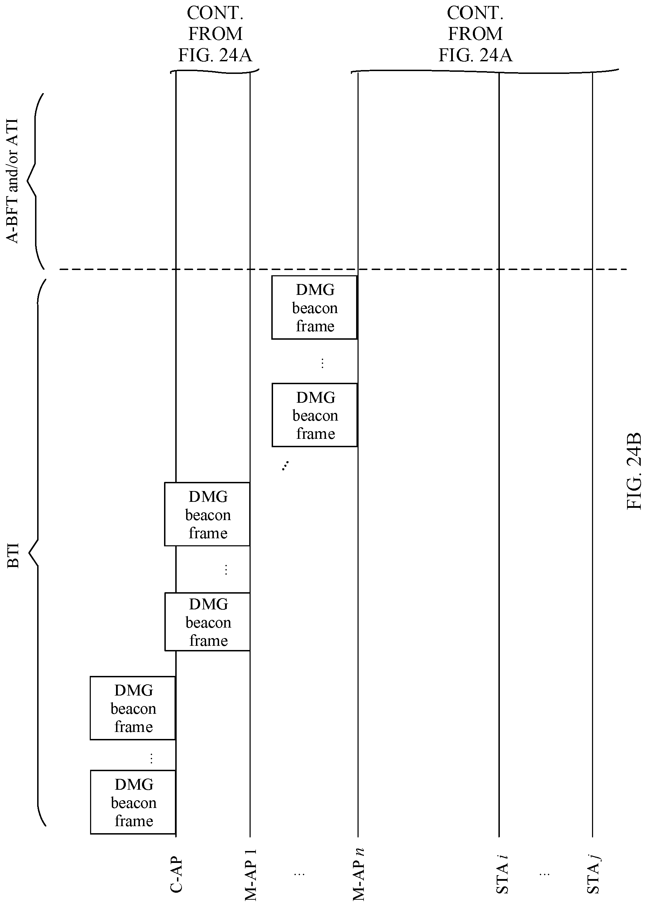

In addition, in some special cases, some STAs may be incapable of performing training with the AP in time, for example, in a case of timeout. An embodiment of this application further provides an unsolicited responder sector sweep (responder sector sweep, unsolicited RSS) process. The process may be as shown in FIG. 24A and FIG. 24B.

In the BTI phase, assuming that STAi, ..., and STAj are unsolicited STAs, the STAs may obtain a training result of the I-TXSS (that is, obtain training information of the transmit sectors of each AP) by using beacon frames sent to other STAs. In this case, in the DTI phase, the unsolicited STAs can perform R-TXSS training. However, due to unsolicited training, the unsolicited STAs cannot perform ordered scheduling by using the C-AP or the M-AP, and can only perform timeslot-based random contention as in the A-BFT. However, in this embodiment of this application, STAs that miss the foregoing beam training procedure can listen to the training information in the beacon frame, and spontaneously perform beam training in a contention manner in the DTI phase. Finally, the STAs can also perform data transmission with associated M-APs by using a beam, to increase a gain.

It should be understood that sequence numbers of the foregoing processes do not indicate an execution sequence. The execution sequence of the processes should be determined based on functions and internal logic of the processes, and should not be construed as any limitation on an implementation process of this embodiment of this application.

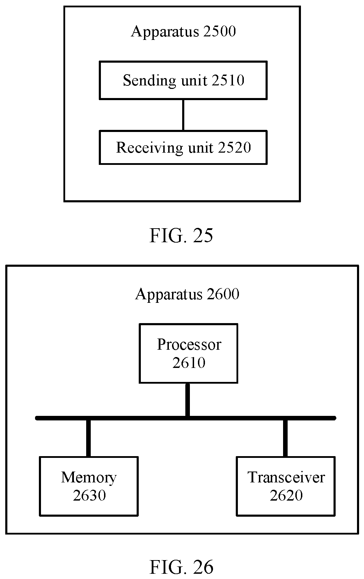

The foregoing describes in detail the beam training method according to the embodiments of this application with reference to FIG. 1 to FIG. 24A and FIG. 24B. The following describes in detail a beam training apparatus according to the embodiments of this application with reference to FIG. 25 and FIG. 26.

FIG. 25 shows a beam training apparatus 2500 according to an embodiment of this application. The apparatus 2500 may be the AP in the foregoing embodiment, or may be a chip in the AP. The apparatus 2500 includes a sending unit 2510 and a receiving unit 2520.

In a possible design, the apparatus 2500 is configured to implement each procedure and each step corresponding to the first AP in the foregoing method embodiments.

The sending unit 2510 is configured to send first information, where the first information is used to configure beam training time periods of a plurality of APs, the beam training time periods of the plurality of APs are used to perform beam training between the plurality of APs and a station STA in coverage of the plurality of APs, and the plurality of APs include the apparatus and at least one second AP. The receiving unit 2520 is configured to receive second information sent by the at least one second AP based on the first information, where the second information is used to feed back a first sector selection result, and the first sector selection result is obtained by performing beam training in the beam training time period.

Optionally, the first information includes at least one of the following information: duration in which the second AP performs initiator transmit sector sweep; duration in which the second AP polls the STA; and duration in which the second AP sends the second information.

Optionally, the second information includes at least one of the following information: identification information of the STA; identification information of at least one AP, in the plurality of APs, that corresponds to the STA during sector sweep; and a first sector selection result, corresponding to the STA, of the at least one AP in the plurality of APs.

Optionally, the sending unit 2510 is specifically configured to: send the first information to the at least one second AP, to enable the at least one second AP to send third information to the STAs, where the third information is used to configure beam training duration of the STAs.

Optionally, the sending unit 2510 is further configured to: send fourth information to the at least one second AP based on the second information, to enable the at least one second AP to send the fourth information to the STAs, where the fourth information is used to indicate a second sector selection result of the at least one second AP, and the second sector selection result includes the entire first sector selection result or a part of the first sector selection result of the at least one second AP.

Optionally, the sending unit 2510 is specifically configured to: send the first information to the STA; send third information to the STA, where the third information is used to configure a beam training time period of the STA; and send fourth information to the STA, where the fourth information is used to indicate a second sector selection result of the at least one second AP, and the second sector selection result includes all or a part of the first sector selection result of the at least one second AP.

Optionally, the third information includes at least one of the following information: duration in which the second AP performs initiator transmit sector sweep; duration in which the STA performs responder transmit sector sweep; and duration in which the STA receives the fourth information.

In another possible design, the apparatus 2500 is configured to implement each procedure and each step corresponding to the second AP in the foregoing method embodiments.

The receiving unit 2520 is configured to receive first information sent by a first AP, where the first information is used to configure beam training time periods of a plurality of APs, the beam training time periods are used to perform beam training between the plurality of APs and a plurality of stations STAs in coverage of the plurality of APs, and the plurality of APs include the first AP and the apparatus; and the sending unit 2510 is configured to send second information to the first AP based on the first information, where the second information is used to feed back a first sector selection result, and the first sector selection result is obtained by performing beam training in the beam training time period.

Optionally, the first information includes at least one of the following information: duration in which the apparatus performs initiator transmit sector sweep; duration in which the apparatus polls the STAs; and duration in which the apparatus sends the second information.

Optionally, the second information includes at least one of the following information: identification information of the STA; identification information of at least one AP, in the plurality of APs, that corresponds to the STA during sector sweep; and a first sector selection result, corresponding to the STA, of the at least one AP in the plurality of APs.

Optionally, the sending unit 2510 is further configured to: send third information to the STAs, where the third information is used to configure beam training duration of the STAs.

Optionally, the receiving unit 2520 is further configured to: receive fourth information sent by the first AP, where the fourth information is used to indicate a second sector selection result of at least one apparatus, and the second sector selection result includes all or a part of the first sector selection result of the at least one apparatus; and the sending unit 2510 is further configured to: send the fourth information to the STAs.

Optionally, the third information includes at least one of the following information: duration in which the apparatus performs initiator transmit sector sweep; duration in which the STA performs responder transmit sector sweep; and duration in which the STA receives the fourth information.

According to the beam training apparatus in this embodiment of this application, the first AP sends the first information used to configure the beam training time periods of the plurality of APs, so that the plurality of APs and the STA in the coverage of the plurality of APs perform beam training based on the beam training time periods, and the beam training time periods of the APs can be configured in a unified manner. This facilitates management and planning of a beam training process, thereby helping improve beam training efficiency.

It should be understood that the apparatus 2500 herein is embodied in a form of functional units. The term "unit" herein may be an application-specific integrated circuit (application specific integrated circuit, ASIC), an electronic circuit, a processor (for example, a shared processor, a dedicated processor, or a group processor) configured to execute one or more software or firmware programs, a memory, a merged logic circuit, and/or another proper component that supports the described function. In an optional example, a person skilled in the art may understand that the apparatus 2500 may be specifically the first AP or the second AP in the foregoing embodiments, and the apparatus 2500 may be configured to perform each procedure and/or each step corresponding to the first AP or the second AP in the foregoing method embodiments. To avoid repetition, details are not described herein again.

The apparatus 2500 in the foregoing solutions has a function of implementing a corresponding step performed by the first AP or the second AP in the foregoing method. The function may be implemented by hardware, or may be implemented by hardware by executing corresponding software. The hardware or the software includes one or more modules corresponding to the foregoing function. For example, a sending unit may be replaced with a transmitter, a receiving unit may be replaced with a receiver, and another unit such as a determining unit may be replaced with a processor, to respectively perform a sending operation, a receiving operation, and a related processing operation in the method embodiments.

In this embodiment of this application, the apparatus in FIG. 25 may alternatively be a chip or a chip system, for example, a system on chip (system on chip, SoC). Correspondingly, a receiving unit and a sending unit may be a transceiver circuit of the chip. This is not limited herein.

FIG. 26 shows another beam training apparatus 2600 according to an embodiment of this application. The apparatus 2600 includes a processor 2610, a transceiver 2620, and a memory 2630. The processor 2610, the transceiver 2620, and the memory 2630 communicate with each other through an internal connection path. The memory 2630 is configured to store an instruction. The processor 2610 is configured to execute the instruction stored in the memory 2630, to control the transceiver 2620 to send a signal and/or receive a signal

In a possible design, the apparatus 2600 is configured to implement each procedure and each step corresponding to the first AP in the foregoing method embodiments.

The processor 2610 is configured to: send, through the transceiver 2620, first information, where the first information is used to configure beam training time periods of a plurality of APs, the beam training time periods of the plurality of APs are used to perform beam training between the plurality of APs and a station STA in coverage of the plurality of APs, and the plurality of APs include the apparatus and at least one second AP; and receive, through the transceiver 2620, second information sent by the at least one second AP based on the first information, where the second information is used to feed back a first sector selection result, and the first sector selection result is obtained by performing beam training in the beam training time period.

In another possible design, the apparatus 2600 is configured to implement each procedure and each step corresponding to the second AP in the foregoing method embodiments.

The processor 2610 is configured to: receive, through the transceiver 2620, first information sent by a first AP, where the first information is used to configure beam training time periods of a plurality of APs, the beam training time periods are used to perform beam training between the plurality of APs and a plurality of stations STAs in coverage of the plurality of APs, and the plurality of APs include the first AP and the apparatus; send, through the transceiver 2620, second information to the first AP based on the first information, where the second information is used to feed back a first sector selection result, and the first sector selection result is obtained by performing beam training in the beam training time period.

It should be understood that the apparatus 2600 may be specifically the first AP or the second AP in the foregoing embodiments, and may be configured to perform each step and/or each procedure corresponding to the first AP or the second AP in the foregoing method embodiments. Optionally, the memory 2630 may include a read-only memory and a random access memory, and provide an instruction and data to the processor. A part of the memory may further include a nonvolatile random access memory. For example, the memory may further store information about a device type. The processor 2610 may be configured to execute the instruction stored in the memory, and when the processor 2610 executes the instruction stored in the memory, the processor 2610 is configured to perform each step and/or procedure in the method embodiments corresponding to the first AP or the second AP.

It should be understood that in the embodiments of this application, the processor in the foregoing apparatus may be a central processing unit (central processing unit, CPU), or the processor may be another general purpose processor, a digital signal processor (DSP), an application-specific integrated circuit (ASIC), a field programmable gate array (FPGA) or another programmable logic component, a discrete gate or a transistor logic device, a discrete hardware assembly, or the like. The general purpose processor may be a microprocessor, or the processor may be any conventional processor or the like.

In an implementation process, the steps in the foregoing methods may be implemented by using a hardware integrated logic circuit in the processor or by using instructions in a form of software. The steps of the methods disclosed with reference to the embodiments of this application may be directly performed by a hardware processor, or may be performed by using a combination of hardware in the processor and a software unit. The software unit may be located in a mature storage medium in the art, such as a random access memory, a flash memory, a read-only memory, a programmable read-only memory, an electrically erasable programmable memory, or a register. The storage medium is located in the memory, and the processor executes the instructions in the memory and completes the steps in the foregoing methods in combination with the hardware of the processor. To avoid repetition, details are not described herein again.

In this application, "at least one" means one or more, and "a plurality of' means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between associated objects. The term "at least one piece (item) of the following" or a similar expression thereof means any combination of these items, including any combination of a singular item (piece) or plural items (pieces). For example, at least one (piece) of a, b, or c may indicate the following cases: a, b, c, a and b, a and c, b and c, or a, b, and c, where a, b, and c may be singular or plural.

A person of ordinary skill in the art may be aware that, the method steps and units described in the embodiments disclosed in this specification may be implemented by electronic hardware, computer software, or a combination thereof. To clearly describe interchangeability between the hardware and the software, the foregoing has generally described the steps and compositions of each embodiment based on functions. Whether the functions are performed by hardware or software depends on particular applications and design constraints of the technical solutions. A person skilled in the art may use different methods to implement the described functions for each particular application, but it should not be considered that the implementation goes beyond the scope of this application.

A person skilled in the art may clearly understand that, for convenient and brief description, for a detailed working process of the foregoing system, apparatus, and unit, refer to the corresponding processes in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division, and may be other division during an actual implementation. For example, a plurality of units or components may be combined or integrated into another system, or some features may be ignored or may not be performed. In addition, the displayed or discussed mutual couplings or direct couplings or communication connections may be implemented through some interfaces, indirect couplings or communication connections between the apparatuses or units, or electrical connections, mechanical connections, or connections in another form.

The units described as separate parts may or may not be physically separated, and parts displayed as units may or may not be physical units, that is, may be located in one position, or may be distributed on a plurality of network units. Some or all of the units may be selected based on actual requirements to achieve the objectives of the solutions of the embodiments of this application.

In addition, functional units in the embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in a form of a software functional unit and sold or used as an independent product, the integrated unit may be stored in a computer-readable storage medium. Based on such an understanding, the technical solutions of this application essentially, or the part contributing to the prior art, or all or some of the technical solutions may be implemented in a form of a software product. The software product is stored in a storage medium and includes several instructions for indicating a computer device (which may be a personal computer, a server, a network device, or the like) to perform all or some of the steps of the methods in the embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific embodiments of this application, but are not intended to limit the protection scope of this application. Any equivalent modification or replacement readily figured out by a person skilled in the art within the technical scope disclosed in this application shall fall within the protection scope of this application. Therefore, the protection scope of this application shall be subject to the protection scope of the claims.

## Claims

1. A beam training method, comprising:
sending, by a first access point AP, first information, wherein the first information is used to configure beam training time periods of a plurality of APs, the beam training time periods of the plurality of APs are used to perform beam training between the plurality of APs and a station STA in coverage of the plurality of APs, and the plurality of APs comprise the first AP and at least one second AP; and
receiving, by the first AP, second information sent by the at least one second AP based on the first information, wherein the second information is used to feed back a first sector selection result, and the first sector selection result is obtained by performing beam training in the beam training time period.

2. The method according to claim 1, wherein the first information comprises at least one of the following information:
duration in which the second AP performs initiator transmit sector sweep;
duration in which the second AP polls the STA; and
duration in which the second AP sends the second information.

3. The method according to claim 1 or 2, wherein the second information comprises at least one of the following information:
identification information of the STA;
identification information of at least one AP, in the plurality of APs, that corresponds to the STA during sector sweep; and
a first sector selection result, corresponding to the STA, of the at least one AP in the plurality of APs.

4. The method according to any one of claims 1 to 3, wherein the sending, by a first access point AP, first information comprises:
sending, by the first AP, the first information to the at least one second AP, to enable the at least one second AP to send third information to the STA, wherein the third information is used to configure a beam training time period of the STA.

5. The method according to claim 4, wherein after the receiving, by the first AP, second information sent by the at least one second AP based on the first information, the method further comprises:
sending, by the first AP, fourth information to the at least one second AP based on the second information, to enable the at least one second AP to send the fourth information to the STA, wherein the fourth information is used to indicate a second sector selection result of the at least one second AP, and the second sector selection result comprises all or a part of the first sector selection result of the at least one second AP.

6. The method according to any one of claims 1 to 3, wherein the sending, by a first access point AP, first information comprises:
sending, by the first AP, the first information to the at least one second AP;
the method further comprises:
sending, by the first AP, third information to the STA, wherein the third information is used to configure a beam training time period of the STA; and
after the receiving, by the first AP, second information sent by the at least one second AP based on the first information, the method further comprises:
sending, by the first AP, fourth information to the STA, wherein the fourth information is used to indicate a second sector selection result of the at least one second AP, and the second sector selection result comprises all or a part of the first sector selection result of the at least one second AP.

7. The method according to any one of claims 4 to 6, wherein the third information comprises at least one of the following information:
duration in which the second AP performs initiator transmit sector sweep;
duration in which the STA performs responder transmit sector sweep; and
duration in which the STA receives the fourth information.

8. A beam training method, comprising:
receiving, by a second access point AP, first information sent by a first AP, wherein the first information is used to configure beam training time periods of a plurality of APs, the beam training time periods are used to perform beam training between the plurality of APs and a plurality of stations STAs in coverage of the plurality of APs, and the plurality of APs comprise the first AP and the second AP; and
sending, by the second AP, second information to the first AP based on the first information, wherein the second information is used to feed back a first sector selection result, and the first sector selection result is obtained by performing beam training in the beam training time period.

9. The method according to claim 8, wherein the first information comprises at least one of the following information:
duration in which the second AP performs initiator transmit sector sweep;
duration in which the second AP polls the STAs; and
duration in which the second AP sends the second information.

10. The method according to claim 8 or 9, wherein the second information comprises at least one of the following information:
identification information of the STAs;
identification information of at least one AP, in the plurality of APs, that corresponds to the STAs during sector sweep; and
a first sector selection result, corresponding to the STAs, of the at least one AP in the plurality of APs.

11. The method according to any one of claims 8 to 10, wherein before the sending, by the second AP, second information to the first AP based on the first information, the method further comprises:
sending, by the second AP, third information to the STAs, wherein the third information is used to configure beam training time periods of the STAs.

12. The method according to claim 11, wherein after the sending, by the second AP, second information to the first AP based on the first information, the method further comprises:
receiving, by the second AP, fourth information sent by the first AP, wherein the fourth information is used to indicate a second sector selection result of at least one second AP, and the second sector selection result comprises all or a part of the first sector selection result of the at least one second AP; and
sending, by the second AP, the fourth information to the STAs.

13. The method according to claim 11 or 12, wherein the third information comprises at least one of the following information:
duration in which the second AP performs initiator transmit sector sweep;
duration in which the STAs perform responder transmit sector sweep; and
duration in which the STAs receive the fourth information.

14. A beam training apparatus, comprising:
a sending unit, configured to send first information, wherein the first information is used to configure beam training time periods of a plurality of APs, the beam training time periods of the plurality of APs are used to perform beam training between the plurality of APs and a station STA in coverage of the plurality of APs, and the plurality of APs comprise the apparatus and at least one second AP; and
a receiving unit, configured to receive second information sent by the at least one second AP based on the first information, wherein the second information is used to feed back a first sector selection result, and the first sector selection result is obtained by performing beam training in the beam training time period.

15. The apparatus according to claim 14, wherein the first information comprises at least one of the following information:
duration in which the second AP performs initiator transmit sector sweep;
duration in which the second AP polls the STA; and
duration in which the second AP sends the second information.

16. The apparatus according to claim 14 or 15, wherein the second information comprises at least one of the following information:
identification information of the STA;
identification information of at least one AP, in the plurality of APs, that corresponds to the STA during sector sweep; and
a first sector selection result, corresponding to the STA, of the at least one AP in the plurality of APs.

17. The apparatus according to any one of claims 14 to 16, wherein the sending unit is specifically configured to:
send the first information to the at least one second AP, to enable the at least one second AP to send third information to the STA, wherein the third information is used to configure a beam training time period of the STA.

18. The apparatus according to claim 17, wherein the sending unit is further configured to:
send fourth information to the at least one second AP based on the second information, to enable the at least one second AP to send the fourth information to the STA, wherein the fourth information is used to indicate a second sector selection result of the at least one second AP, and the second sector selection result comprises all or a part of the first sector selection result of the at least one second AP.

19. The apparatus according to any one of claims 14 to 18, wherein the sending unit is specifically configured to:
send the first information to the STA;
send third information to the STA, wherein the third information is used to configure a beam training time period of the STA; and
send fourth information to the STA, wherein the fourth information is used to indicate a second sector selection result of the at least one second AP, and the second sector selection result comprises all or a part of the first sector selection result of the at least one second AP.

20. The apparatus according to any one of claims 17 to 19, wherein the third information comprises at least one of the following information:
duration in which the second AP performs initiator transmit sector sweep;
duration in which the STA performs responder transmit sector sweep; and
duration in which the STA receives the fourth information.

21. A beam training apparatus, comprising:
a receiving unit, configured to receive first information sent by a first AP, wherein the first information is used to configure beam training time periods of a plurality of APs, the beam training time periods are used to perform beam training between the plurality of APs and a plurality of stations STAs in coverage of the plurality of APs, and the plurality of APs comprise the first AP and the apparatus; and
a sending unit, configured to send second information to the first AP based on the first information, wherein the second information is used to feed back a first sector selection result, and the first sector selection result is obtained by performing beam training in the beam training time period.

22. The apparatus according to claim 21, wherein the first information comprises at least one of the following information:
duration in which the apparatus performs initiator transmit sector sweep;
duration in which the apparatus polls the STAs; and
duration in which the apparatus sends the second information.

23. The apparatus according to claim 21 or 22, wherein the second information comprises at least one of the following information:
identification information of the STAs;
identification information of at least one AP, in the plurality of APs, that corresponds to the STAs during sector sweep; and
a first sector selection result, corresponding to the STAs, of the at least one AP in the plurality of APs.

24. The apparatus according to any one of claims 21 to 23, wherein the sending unit is further configured to:
send third information to the STAs, wherein the third information is used to configure beam training time periods of the STAs.

25. The apparatus according to claim 24, wherein the receiving unit is further configured to:
receive fourth information sent by the first AP, wherein the fourth information is used to indicate a second sector selection result of at least one apparatus, and the second sector selection result comprises all or a part of the first sector selection result of the at least one apparatus; and
the sending unit is further configured to:
send the fourth information to the STAs.

26. The apparatus according to claim 24 or 25, wherein the third information comprises at least one of the following information:
duration in which the apparatus performs initiator transmit sector sweep;
duration in which the STAs perform responder transmit sector sweep; and
duration in which the STAs receive the fourth information.

27. An apparatus, comprising a processor, a memory, and an instruction that is stored in the memory and that can be run on the processor, wherein when the instruction is run, the apparatus is enabled to perform the method according to any one of claims 1 to 13.

28. A communications system, comprising the apparatus according to any one of claims 14 to 20 and the apparatus according to any one of claims 21 to 26.

29. A computer-readable storage medium, comprising an instruction, wherein when the instruction is run on a computer, the computer is enabled to perform the method according to any one of claims 1 to 13.

30. A computer program product, wherein when the computer program product is run on a computer, the computer is enabled to perform the method according to any one of claims 1 to 13.
